# EUROPEAN PATENT SPECIFICATION

(11) **EP 1 077 238 B1**
(45) Date of publication and mention of the grant of the patent: **02.11.2005**
(21) Application number: 00117812.8
(22) Date of filing: 18.08.2000
(51) Int. Cl.: C09D 11/00

(54) **Ink composition for ink jet recording**
Tintenzusammensetzung für Tintenstrahlaufzeichung
Composition d'encre pour l'enregistrement par jet d'encre

(30) Priority: 19.08.1999 JP 23311199; 09.08.2000 JP 2000241097
(43) Date of publication of application: 21.02.2001
(73) Proprietor: SEIKO EPSON CORPORATION, Shinjuku-ku, Tokyo-to (JP)
(72) Inventor: Miyabayashi, Toshiyuki, c/o Seiko Epson Corp., Suwa-shi, Nagano-ken (JP)
(74) Representative: Grünecker, Kinkeldey, Stockmair & Schwanhäusser Anwaltssozietät

(56) References cited:
- EP-A- 0 859 037
- EP-A- 0 887 391
- PATENT ABSTRACTS OF JAPAN vol. 1998, no. 02, 30 January 1998 (1998-01-30) & JP 09 279053 A (MITSUBISHI CHEM CORP), 28 October 1997 (1997-10-28)
- PATENT ABSTRACTS OF JAPAN vol. 1998, no. 11, 30 September 1998 (1998-09-30) & JP 10 176130 A (MITSUBISHI PENCIL CO LTD), 30 June 1998 (1998-06-30)
- DATABASE WPI Section Ch, Week 199402 Derwent Publications Ltd., London, GB; Class A14, AN 1994-012348 XP002153617 & JP 05 320276 A (NIPPON PAINT CO LTD), 3 December 1993 (1993-12-03)
- DATABASE WPI Section Ch, Week 199907 Derwent Publications Ltd., London, GB; Class A14, AN 1999-076652 XP002153618 & JP 10 316909 A (MITSUBISHI CHEM CORP), 2 December 1998 (1998-12-02)

## Description

### BACKGROUND OF THE INVENTION

### Field of the Invention

The present invention relates to an ink composition for ink jet recording which can yield printed images having high quality on recording media, and an ink jet recording method using the same.

### Background Art

Ink jet recording is a recording method wherein droplets of ink are ejected through fine nozzles to form letters or figures on the surface of recording media. Various properties are required of inks used in such ink jet recording, and examples thereof include good dispersion stability, ejection stability, and rubbing/scratch resistance of prints.

Inks comprising various water-soluble dyes dissolved in aqueous media have generally been used. Further, inks comprising pigments dispersed in aqueous media have also been provided. Inks comprising pigments dispersed in aqueous media are advantageously superior to inks using water-soluble dyes in waterfastness and lightfastness of printed images.

On the other hand, the use of a pigment in a water-based ink composition poses a problem of dispersion stability. In this case, in order to stably disperse the pigment in an aqueous medium, polymeric dispersants, surfactants or the like are generally used as a dispersant. An ink using a pigment, the surface of which has been subjected to some treatment for enhancing ejection stability, dispersion stability, print density, color development, etc., has also been proposed in the art. For example, Japanese Patent Laid-open No. 319444/1996 proposes surface-oxidized pigment particles, Japanese Patent Publication No. 94634/1995 and Japanese Patent Laid-Open No. 59715/1996 propose encapsulated fine particles of pigment, and Japanese Patent Laid-Open Nos. 339516/1993, 302227/1996, 302228/1996, and 81647/1996 propose pigment particles with a polymer grafted on the surface thereof.

In addition to the above proposals, proposals on techniques for improving the fixation of pigment on recording media have been made. For example, Japanese Patent Laid-Open No. 218015/1996 proposes an ink using a pigment which has been coated with a resin having a film-forming property at room temperature by a phase inversion emulsion method. Japanese Patent Laid-open No. 31360/1997 proposes an ink using a pigment which has been coated with an anionic group-containing organic polymer compound by a salting-out method. Japanese Patent Laid-Open No. 286939/1997 proposes an ink using a polymer emulsion wherein fine particles of a polymer have been impregnated with a colorant by a phase inversion emulsion method.

Further, the addition of a resin to an ink composition has been proposed from the viewpoint of improving the fixation of a colorant onto recording media. It is considered that this resin serves as a binder to strongly fix the colorant onto recording media. Regarding resin-containing ink compositions, for example, Japanese Patent Publication No. 1426/1987 proposes an ink comprising a pigment and a resin emulsion dispersed in water, Japanese Patent Laid-Open No. 157668/1980 proposes that a pigment is dispersed in a water-insoluble resin emulsion dispersion, Japanese Patent Laid-Open No. 217088/1989 proposes the use of an emulsion having a specific film-forming temperature, and, likewise, Japanese Patent Laid-Open Nos. 60068/1991 and 18462/1992 propose an ink using a resin emulsion.

Further, the addition of a penetrating agent has been proposed from the viewpoint of improving the penetration of ink into paper. For example, Japanese Patent Laid-Open No. 147861/1981 proposes the use of triethylene glycol monomethyl ether, Japanese Patent Laid-Open No. 111165/1997 proposes the use of ethers of ethylene glycol, diethylene glycol, or triethylene glycol. Further, U.S. Patent No. 5156675 proposes the addition of diethylene glycol monobutyl ether, U.S. Patent No. 5183502 proposes the addition of Surfynol 465, which is an acetylene glycol surfactant manufactured by Nissin Chemical Industry Co., Ltd., and U.S. Patent No. 5196056 proposes the use of diethylene glycol monobutyl ether in combination with Surfynol 465. Furthermore, U.S. Patent No. 2083372 proposes the use of ethers of diethylene glycol in inks.

### SUMMARY OF THE INVENTION

The present inventor has now found that a combination of a water-based dispersion of a pigment, encapsulated in a polymer produced from a polymerizable surfactant having both nonionic hydrophilicity and anionic hydrophilicity and a monomer, with fine particles of a polymer can realize an ink composition possessing excellent properties. Among others, the present inventor has found that the above combination can provide an ink for ink jet recording which possesses excellent dispersion stability and ejection stability, can yield high-quality images free from feathering or bleeding and having high print density and excellent color development on plain papers and recycled papers, and can yield images having satisfactory rubbing/scratch resistance on plain papers and recycled papers, as well as on other recording media, such as coated paper. The present inventor has particularly found that the use of penetrating agents, such as glycol ethers or surfactants, can increase the content of pigment in ink and can provide an ink for ink jet recording which can enhance print density and, at the same time, does not significantly cause an increase in viscosity, sedimentation of colorant, and a deterioration in properties of the ink during storage for a long period of time, that is, has excellent stability. The present inventor has further found that the deposition of two liquids, that is, the ink composition according to the present invention and a reaction solution containing a reactant capable of producing coagulate upon contact with this ink composition, onto a recording medium to perform printing can realize an ink jet recording method which can improve fixation and fast drying properties and can provide significantly good print quality. The present invention has been made based on such finding.

Accordingly, it is an object of the present invention to provide an ink composition for ink jet recording, which possesses excellent dispersion stability and ejection stability and can yield images having excellent rubbing/scratch resistance, and an ink jet recording method using the same. It is another object of the present invention to provide an ink composition for ink jet recording, which is free from sedimentation of colorant and a deterioration in properties during storage for a long period of time, that is, has excellent stability, and an ink jet recording method using the same.

According to one aspect of the present invention, there is provided an ink composition for ink jet recording, comprising a water-based pigment dispersion, fine particles of a polymer, a water-soluble organic solvent, and water,
the water-based pigment dispersion comprises a pigment and a co-polymer which encapsulates the pigment, and the co-polymer is obtained from a polymerizable surfactant having both nonionic hydrophilicity and anionic hydrophilicity and a monomer.

According to another aspect of the present invention, there is provided an ink jet recording method using two liquids.

The ink jet recording method using two liquids according to the present invention comprises the step of depositing, on a recording medium, an ink composition and a reaction solution containing a reactant which, when brought into contact with the ink composition, produces coagulate, thereby performing printing,
the ink composition comprising at least a water-based pigment dispersion, fine particles of a polymer, a water-soluble organic solvent, and water,
the water-based pigment dispersion comprises a pigment and a co-polymer which encapsulates the pigment, and the co-polymer is obtained from a polymerizable surf actant having both nonionic hydrophilicity and anionic hydrophilicity and a monomer.

### BRIEF DESCRIPTION OF THE DRAWINGS

Fig. 1 is a diagram showing an embodiment of the ink jet recording apparatus according to the present invention, wherein a recording head is provided separately from an ink tank and an ink composition and a reaction solution are fed into the recording head through an ink tube;
Fig. 2 is an enlarged view showing a nozzle face of a recording head, wherein 1b designates a nozzle face for a reaction solution and 1c a nozzle face for ink compositions;
Fig. 3 is a diagram illustrating ink jet recording using the recording head shown in Fig. 2, wherein numeral 31 designates a reaction solution-deposited region and numeral 32 a printed region where an ink composition has been printed on a reaction solution-deposited portion;
Fig. 4 is a diagram showing another embodiment of the recording head usable in practicing the present invention, wherein all ejection nozzles are arranged in the lateral direction; and
Fig. 5 is a diagram showing another embodiment of the ink jet recording apparatus according to the present invention, wherein a recording head is integral with an ink tank.

### DESCRIPTION OF THE PREFERRED EMBODIMENTS

### Ink composition

The ink composition according to the present invention comprises a water-based pigment dispersion, fine particles of a polymer, a water-soluble organic solvent, and water. The ink composition according to the present invention can be used as an ink for handwriting or an ink for writing implements, such as ballpoint pens and fountain pens, and is preferably used in ink jet recording.

### Water-based pigment dispersion

The water-based pigment dispersion according to the present invention comprises a pigment and a co-polymer which minute and stable encapsulates the pigment, and the co-polymer is obtained from a polymerizable surfactant having both nonionic hydrophilicity and anionic hydrophilicity and a monomer. The "water-based pigment dispersion" refers to a stable dispersion of minute and stable encapsulated particles of pigment in an aqueous medium. The polymerizable surfactant having both anionic hydrophilicity and nonionic hydrophilicity according to the present invention adsorbs on the surface of pigment particles, has excellent dispersion stability under conditions for subsequent polymerization, that is, can prevent coagulation among particles, and thus advantageously can easily form encapsulated particles.

The water-based pigment dispersion according to the present invention has excellent dispersion stability. The reason for this has not been fully elucidated yet. However, it is believed that, as compared with mere adsorption of a dispersant on the surface of pigment particles inspired by van der waals forces, the encapsulation can provide mechanically stronger fixation of the dispersant on the surface of pigment particles. The above theory is used only for explaining the present invention, and should not be construed as limiting the scope of the present invention.

Preferred polymerizable surfactants having both anionic hydrophilicity and nonionic hydrophilicity usable in the present invention include compounds represented by formula (I). polymerizable surfactants represented by formula (I) are disclosed in Japanese Patent Laid-Open Nos. 320276/1993 and 316909/1998. 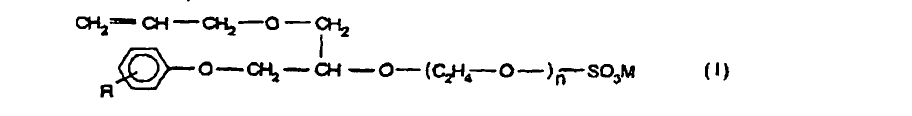 wherein
R represents a hydrogen atom or a hydrocarbon residue having 1 to 12 carbon atoms; n is a number of 2 to 20; and M represents an alkali metal atom, an ammonium salt, or an alkanolamine.

Properly regulating R and n value in formula (I) permits the hydrophilicity or the hydrophobicity to be made equivalent to that of the surface of the pigment. Specific examples of preferred polymerizable surfactants represented by formula (I) include compounds represented by formulae (II) to (V). They may be used alone or as a mixture of two or more. According to a preferred embodiment of the present invention, the polymerizable surfactant is copolymerized although the polymerizable surfactant may be homopolymerized.

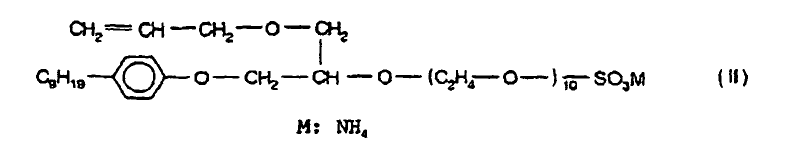

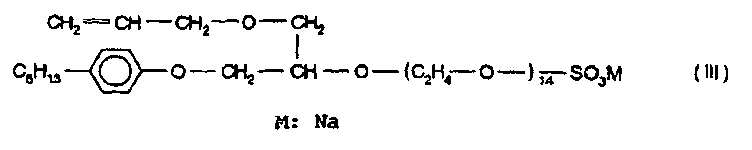

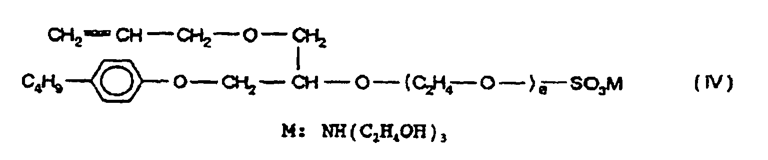

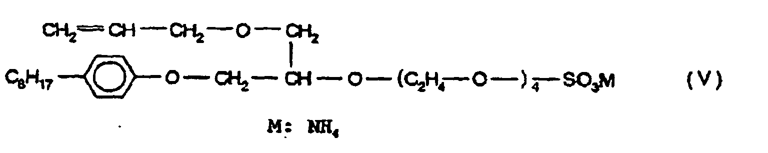

According to the present invention, commercially available products may also be used as the polymerizable surfactant, and examples thereof include Aqualon HS Series manufactured by Dai-Ichi Kogyo Seiyaku Co., Ltd. (Aqualon HS-05, HS-10, HS-20, and HS-1025), Aqualon RN Series manufactured by Dai-Ichi Kogyo Seiyaku Co., Ltd. (RN-10, RN-20, RN-30, RN-50, and RN-2025), New Frontier Series manufactured by Dai-Ichi Kogyo Seiyaku Co., Ltd. (New Frontier N-177E and S-510), Adeka Reasoap SE Series manufactured by Asahi Denka Kogyo Ltd. (SE-10N and SE-20N), and Adeka Reasoap NE Series manufactured by Asahi Denka Kogyo Ltd. (NE-10, NE-20, NE-30, NE-40, and NE-50). Among them, Adeka Reasoap SE Series SE-10N and SE-20N are particularly preferred.

The amount of the polymerizable surfactant added is preferably about 10 to 150% by weight, more preferably about 20 to 100% by weight, based on the pigment. The addition of the polymerizable surfactant in an amount of not less than 10% by weight can improve the dispersion stability of the ink composition. The addition of the polymerizable surfactant in an amount of not more than 150% by weight can inhibit the occurrence of the polymerizable surfactant remaining unadsorbed on the pigment and can prevent polymer other than that involved in encapsulated particles from being present. This can improve the ejection stability of the ink composition.

Any monomer may be used in the present invention so far as the monomer is highly copolymerizable with the polymerizable surfactant. Since, however, the polymerizable surfactant represented by formula (I) is a monomer having a high electron donating property, the monomer according to the present invention preferably has a high electron accepting property. Specific examples of the monomer having a high electron accepting property include: acrylonitrile; fumaronitrile; diesters of fumaric acid, such as dibutyl fumarate; diesters of maleic acid, such as dibutyl maleate; maleimides, such as N-phenylmaleimide; and vinylidene cyanide. They may be used alone or as a mixture of two or more.

Examples of monomers usable herein include acrylic acid, acrylic esters, methacrylic acid, and methacrylic esters. Specific examples thereof include acrylic acid, methyl acrylate, ethyl acrylate, n-butyl acrylate, butoxyethyl acrylate, benzyl acrylate, phenyl acrylate, phenoxyethyl acrylate, cyclohexyl acrylate, dicyclopentanyl acrylate, dicyclopentenyl acrylate, dicyclopentenyloxyethyl acrylate, tetrahydrofurfuryl acrylate, isobornyl acrylate, 2-hydroxyethyl acrylate, 2-hydroxypropyl acrylate, 2-acryloyloxyethylsuccinic acid, 2-acryloyloxyethylphthalic acid, caprolactone acrylate, glycidyl acrylate, methacrylic acid, methyl methacrylate, ethyl methacrylate, n-butyl methacrylate, 2-ethylhexyl methacrylate, butoxymethyl methacrylate, benzyl methacrylate, phenyl methacrylate, phenoxyethyl methacrylate, cyclohexyl methacrylate, dicyclopentanyl methacrylate, dicyclopentenyl methacrylate, dicyclopentenyloxyethyl methacrylate, tetrahydrofurfuryl methacrylate, isobornyl methacrylate, 2-hydroxyethyl methacrylate, 2-hydroxypropyl methacrylate, 2-hydroxybutyl methacrylate, glycerol methacrylate, 2-methacryloyloxyethylsuccinic acid, 2-methacryloyloxyethylphthalic acid, caprolactone methacrylate, glycidyl methacrylate, sulfoethyl methacrylate, butylacrylamidosulfonic acid, phosphoethyl methacrylate, ethylene glycol diacrylate, diethylene glycol diacrylate, triethylene glycol diacrylate, tetraethylene glycol diacrylate, polyethylene glycol diacrylate, allyl acrylate, bis(acryloxyethyl)hydroxyethyl isocyanurate, bis(acryloxyneopentyl glycol) azipate, 1,3-butylene glycol diacrylate, 1,6-hexanediol diacrylate, neopentyl glycol diacrylate, propylene glycol diacrylate, polypropylene glycol diacrylate, 2-hydroxy-1,3-diacryloxypropane, 2,2-bis[4-(acryloxy)phenyl]propane, 2,2-bis[4-(acryloxyethoxy)phenyl]propane, 2,2-bis[4-(acryloxyethoxy or diethoxy)phenyl]propane, 2,2-bis[4-(acryloxyethoxy or polyethoxy)phenyl]propane, hydroxypivalic acid neopentyl glycol diacrylate, 1,4-butanediol diacrylate, dicyclopentanyl diacrylate, dipentaerythritol hexaacrylate, dipentaerythritol monohydroxypentaacrylate, ditrimethylolpropane tetraacrylate, pentaerythritol triacrylate, tetrabromobisphenol A diacrylate, triglycerol diacrylate, trimethylolpropane triacrylate, tris(acryloxyethyl) isocyanurate, ethylene glycol dimethacrylate, diethylene glycol dimethacrylate, triethylene glycol dimethacrylate, tetraethylene glycol dimethacrylate, polyethylene glycol dimethacrylate, propylene glycol dimethacrylate, polypropylene glycol dimethacrylate, 1,3-butylene glycol dimethacrylate, 1,4-butanediol dimethacrylate, 1,6-hexanediol dimethacrylate, neopentyl glycol dimethacrylate, 2-hydroxy-1,3-dimethacryloxypropane, 2,2-bis[4-(methacryloxy)phenyl]propane, 2,2-bis[4-(methacryloxyethoxy)phenyl]propane, 2,2-bis[4-(methacryloxyethoxydiethoxy)phenyl]propane, 2,2-bis[4-(methacryloxyethoxypolyethoxy)phenyl]propane, tetrabromobisphenol A dimethacrylate, dicyclopentanyl dimethacrylate, dipentaerythritol hexamethacrylate, glycerol dimethacrylate, hydroxypivalic acid neopentyl glycol dimethacrylate, dipentaerythritol monohydroxypentamethacrylate, ditrimethylolpropane tetramethacrylate, pentaerythritol trimethacrylate, pentaerythritol tetramethacrylate, triglycerol dimethacrylate, and trimethylolpropane trimethacrylate.

The amount of the monomer added is preferably about 2 to 15 moles, more preferably about 3 to 12 moles, based on one mole of the polymerizable surfactant. The addition of the monomer in an amount of not less than 2 moles based on one mole of the polymerizable surfactant can provide encapsulated pigment particles having excellent dispersion stability in an aqueous medium. On the other hand, the addition of the monomer in an amount of not more than 15 moles based on one mole of the polymerizable surfactant can enhance the dispersion stability of the ink composition, because the monomer can be satisfactorily dissolved in an adsorbed layer of the polymerizable surfactant and this can inhibit the production of water-insoluble polymer and can inhibit a relative reduction in the amount of ionic repellent groups.

Polymerization initiators usable in the present invention include potassium persulfate, ammonium persulfate, sodium persulfate, 2,2-azobis(2-methylpropionamidine) dihydrochloride, and 4,4-azobis(4-cyanovaleric acid).

The pigment used in the present invention is used as a colorant. The pigment is a preferred colorant from the viewpoints of lightfastness and waterfastness.

Regarding the pigment, inorganic and organic pigments are usable without particular limitation. Inorganic pigments usable herein include, in addition to titanium oxide and iron oxide, carbon blacks produced by known processes, such as contact, furnace, and thermal processes. Organic pigments usable herein include: azo pigments including azo lake, insoluble azo pigment, condensed azo pigment, and chelate azo pigment; polycyclic pigments, for example, phthalocyanine, perylene, perinone, anthraquinone, quinacridone, dioxazine, thioindigo, isoindolinone, and quinophthalone pigments; dye chelates, for example, basic dye chelates and acid dye chelates; nitro pigments; nitroso pigments; and aniline black.

carbon blacks usable as black inks include: No. 2300, No. 900, MCF 88, No. 33, No. 40, No. 45, No. 52, MA 7, MA 8, MA 100, and No. 2200 B, which are manufactured by Mitsubishi Chemical Corporation; Raven 5750, Raven 5250, Raven 5000, Raven 3500, Raven 1255, and Raven 700, which are manufactured by Columbian Carbon Co., Ltd.; Regal 400 R, Regal 330 R, Regal 660 R, Mogul L, Monarch 700, Monarch 800, Monarch 880, Monarch 900, Monarch 1000, Monarch 1100, Monarch 1300, and Monarch 1400, which are manufactured by Cabot Corporation; Color Black FW 1, Color Black FW 2, Color Black FW 2V, Color Black FW 18, Color Black FW 200, Color Black S 150, Color Black S 160, Color Black S 170, Printex 35, Printex U, Printex V, Printex 140 U, Special Black 6, Special Black 5, Special Black 4A, and Special Black 4, which are manufactured by Degussa.

Pigments usable in yellow inks include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 128, C.I. Pigment Yellow 129, C.I. Pigment Yellow 138, C.I. Pigment Yellow 150, C.I. Pigment Yellow 151, C.I. Pigment Yellow 154, C.I. Pigment Yellow 155, C.I. Pigment Yellow 180, and C.I. Pigment Yellow 185.

Pigments usable in magenta inks include C.I. Pigment Red 5, C.I. Pigment Red 7, C.I. Pigment Red 12, C.I. Pigment Red 48 (Ca), C.I. Pigment Red 48 (Mn), C.I. Pigment Red 57 (Ca), C.I. Pigment Red 57 : 1, C.I. Pigment Red 112, C.I. Pigment Red 122, C.I. Pigment Red 123, C.I. Pigment Red 168, C.I. Pigment Red 184, and C.I. Pigment Red 202.

Pigments usable in cyan inks include C.I. Pigment Blue 1, C.I. Pigment Blue 2, C.I. Pigment Blue 3, C.I. Pigment Blue 15 : 3, C.I. Pigment Blue 15 : 34, C.I. Pigment Blue 16, C.I. Pigment Blue 22, C.I. Pigment Blue 60, C.I. Vat Blue 4, and C.I. Vat Blue 60.

The amount of the pigment added is preferably about 5 to 50% by weight, more preferably about 5 to 30% by weight, based on the water-based pigment dispersion. The particle diameter of the pigment is preferably not more than 400 nm, more preferably not more than 200 nm.

The content of the water-based pigment dispersion is preferably about 1 to 20% by weight, more preferably about 1 to 10% by weight, based on the ink composition. When the content of the water-based pigment dispersion is not less than 1% by weight, satisfactory print density can be realized. On the other hand, when the content of the pigment dispersion is not more than 20% by weight, the ink composition has a viscosity suitable for ink jet recording, contributing to good ejection stability.

The water-based pigment dispersion according to the present invention may be produced as follows.

Specifically, the water-based pigment dispersion may be produced by immobilizing a polymerizable surfactant on a pigment, that is, by encapsulization of a pigment. More specifically, a pigment and a polymerizable surfactant are added optionally in an aqueous organic solvent and/or in water, and the mixture is dispersed and wet ground, for example, by ultrasonics, ball mill, or sand grinder. Thereafter, a monomer to be copolymerized and/or a polymerization initiator optionally while continuing grinding are added, and a polymerization reaction is allowed to proceed at 40 to 100°C for 10 to 60 hr. Thus, encapsulated pigment particles can be prepared. The amount of the polymerization initiator added is preferably 0.1 to 10% by weight, more preferably 1 to 5% by weight, based on the monomer. The encapsulated pigment particles thus obtained are then centrifuged or filtered to remove coarse particles. Water-soluble organic solvents, such as alcohols, glycols, or amides, water-soluble polymers, surfactants, fungicides and the like may be then added according to the application of the ink composition to prepare the water-based pigment dispersion according to the present invention. More preferably, the water-based pigment dispersion is prepared according to a production process described in Japanese Patent Laid-Open No. 316909/1998.

### Fine particles of polymer

The ink composition according to the present invention contains fine particles of a polymer. The term "fine particles of polymer" used herein refers to fine particles comprising polymer component of a polymer preferably fine particles of a polymer having a film-forming property. The term "aqueous emulsion" used herein refers to an aqueous dispersion comprising water as a continuous phase and fine particles of a polymer as dispersed particles. The "aqueous emulsion" is often called "polymer emulsion" or "resin emulsion." Specific examples of the polymer component constituting the fine particles of a polymer include acrylic resin, vinyl acetate resin, styrene/butadiene resin, vinyl chloride resin, acryl/styrene resin, butadiene resin, styrene resin, crosslinked acrylic resin, crosslinked styrene resin, benzoguanamine resin, phenolic resin, silicone resin, and epoxy resin. Regarding these resins, the form of copolymerization is not limited, and the resins may be present, for example, in the form of a block copolymer or a random copolymer.

According to the present invention, the fine particles of a polymer are preferably those of resins having a film-forming property among the above resins. The term "film-forming property" used herein means that evaporating the water component of an aqueous emulsion of the fine particles of a polymer dispersed in water results in the formation of a resin film. Likewise, the ink composition with the fine particles of a polymer added thereto has a property such that evaporating water or the aqueous organic solvent results in the formation of a resin film. This resin film functions to strongly fix the pigment component contained in the ink composition onto the surface of recording media. It is considered that this can realize images having excellent rubbing/scratch resistance and waterfastness.

According to a preferred embodiment of the present invention, the fine particles of a polymer have a minimum film-forming temperature of 30°C or below, more preferably room temperature or below (around 25°C), most preferably 10°C or below. The film formation of the fine particles of a polymer at 30°C or below is preferred, because the film formation on the printing surface proceeds automatically and the pigment is strongly fixed on recording media. The term "minimum film-forming temperature" used herein refers to a minimum temperature at which, when an aqueous emulsion prepared by dispersing fine particles of a polymer in water is thinly cast onto a sheet of a metal, such as aluminum, to form a coating which is then gradually heated, a transparent, continuous film is formed. In this case, a white powder is formed in a temperature region below the minimum film-forming temperature. Further, according to a preferred embodiment of the present invention, the fine particles of a polymer have a glass transition point of 10°C or below.

According to a preferred embodiment of the present invention, the fine particles of a polymer have carboxyl groups on the surface thereof and, in addition, have high reactivity with a divalent metal salt. More specifically, the fine particles of a polymer have a reactivity with a divalent metal salt such that, when 3 volumes of a 0.1 wt% aqueous emulsion of the fine particles of a polymer is brought into contact with one volume of a 1 mol/liter aqueous divalent metal salt solution, the time required for the transmission of light having a wavelength of 700 nm to become 50% of the initial value is preferably not more than 1 x 10⁴ sec, more preferably not more than 1 x 10³ sec, still more preferably not more than 1 x 10² sec. The fine particles of a polymer, when brought into contact with divalent metal ions, are reacted with the divalent metal ions to form suspended matter which lowers the transparency of the solution. The amount of the resultant suspended matter is measured in terms of light transmission. Divalent metal ions include Ca²⁺, Cu²⁺, Ni²⁺, Mg²⁺, Zn²⁺, and Ba²⁺. Anions, which form salts with divalent metal ions, include Cl⁻, NO³⁻, I⁻, Br⁻, ClO³⁻, and CH₃COO⁻. This high reactivity is considered attributable to the presence of a relatively large amount of carboxyl groups on the surface of the fine particles of a polymer. Ink compositions containing fine particles of a polymer having, on the surface thereof, a large amount of carboxyl groups having high reactivity do not have any affinity for a nozzle plate, in a head for ink jet recording, which has been subjected to water repellency-imparting treatment. This can provide a great advantage that problems involved in conventional resin-containing ink compositions, that is, an ink droplet trajectory directionality problem and a failure of the ink droplets to be ejected, caused by good wettability of the nozzle plate by the ink composition, can be effectively prevented. According to a preferred embodiment of the present invention, the contact angle of an aqueous emulsion, prepared by dispersing the fine particles of a polymer in water to provide a fine particles of a polymer concentration of 10% by weight, on a teflon sheet is not less than 70 degrees. Further, the surface tension of an aqueous emulsion, prepared by dispersing the fine particles of a polymer in water to provide a fine particle of a polymer concentration of 35% by weight is preferably not less than 40 x 10⁻³ N/m (40 dyne/cm, 20°C). The utilization of such fine particles of a polymer, when the ink composition is used in ink jet recording, can more effectively prevent the ink droplet trajectory directionality problem and, at the same time, can realize good prints.

Further, the high level of hydrophilicity of the surface of the fine particles of a polymer can advantageously impart excellent storage stability to the ink composition.

According to another preferred embodiment of the present invention, the fine particles of a polymer contain 1 to 10% by weight of a structure derived from an unsaturated vinyl monomer having a carboxyl group and has a structure crosslinked by a crosslinkable monomer having two or more polymerizable double bonds with the content of the structure derived from the crosslinkable monomer being 0.2 to 4% by weight. The utilization of a three-dimensionally crosslinked polymer prepared by copolymerization of crosslinkable monomers preferably having two or more polymerizable double bonds, more preferably three or more polymerizable double bonds, makes it more difficult for the surface of the nozzle plate to be wetted by the ink composition. This can more effectively reduce the ink droplet trajectory directionality problem and, at the same time, can further improve the ejection stability.

According to the present invention, the fine particles of a polymer used may have a single-particle structure. On the other hand, according to the present invention, fine particles of a polymer having a core/shell structure may also be utilized. The core/shell structure comprises a core and a shell surrounding the core. The term "core/shell structure" used herein refers to "a form such that two or more polymers having different compositions are present in a phase separated state in a particle." Forms of the core/shell structure usable in the present invention include a form wherein the core is entirely covered with the shell, a form wherein the core is partially covered with the shell, and a form wherein a part of the polymer constituting the shell forms a domain or the like within the core particle. Further, the particle may have a multi-layer structure of three or more layers wherein at least one additional layer having a different composition is further interposed between the core and the shell.

According to a preferred embodiment of the present invention, the core is formed of a resin having epoxy groups, and the shell is formed of a resin having carboxyl groups. The epoxy group is reactive with the carboxyl group. These two groups are allowed to exist separately from each other. That is, the epoxy group and the carboxyl group are present respectively in the core and shell, or vice versa. The reduction in the amount of water and the water-soluble organic solvent causes coalescence of the fine particles of a polymer with one another, and the fine particles of a polymer are deformed by pressure involved in the film formation. As a result, the epoxy groups in the core is bonded to the carboxyl groups in the shell to form a network structure. This can advantageously form a coating having higher strength. The amount of the unsaturated vinyl monomer having an epoxy group is preferably 1 to 10% by weight. According to the present invention, a reaction of a part of the epoxy groups with a part of the carboxyl groups before the film formation is acceptable so far as the film-forming property is not lost. In the present invention, the property such that, when reactive functional groups are allowed to coexist within the fine particles of a polymer, these groups are reacted with each other without the addition of any curing agent at the time of film formation to form a network structure, will be referred to as "self-crosslinkable."

The fine particles of a polymer may be prepared by conventional emulsion polymerization. Specifically, the fine particles of a polymer may be prepared by emulsion polymerization of an unsaturated vinyl monomer in water in the presence of a polymerization catalyst and an emulsifier.

Unsaturated vinyl monomers usable herein include those commonly used in emulsion polymerization, such as acrylic ester monomers, methacrylic ester monomers, aromatic vinyl monomers, vinyl ester monomers, vinyl cyanide compound monomers, halogenated monomers, olefin monomers, and diene monomers. Specific examples thereof include: acrylic esters, such as methyl acrylate, ethyl acrylate, isopropyl acrylate, n-butyl acrylate, isobutyl acrylate, n-amyl acrylate, isoamyl acrylate, n-hexyl acrylate, 2-ethylhexyl acrylate, octyl acrylate, decyl acrylate, dodecyl acrylate, octadecyl acrylate, cyclohexyl acrylate, phenyl acrylate, benzyl acrylate, and glycidyl acrylate; methacrylic esters, such as methyl methacrylate, ethyl methacrylate, isopropyl methacrylate, n-butyl methacrylate, isobutyl methacrylate, n-amyl methacrylate, isoamyl methacrylate, n-hexyl methacrylate, 2-ethylhexyl methacrylate, octyl methacrylate, decyl methacrylate, dodecyl methacrylate, octadecyl methacrylate, cyclohexyl methacrylate, phenyl methacrylate, benzyl methacrylate, and glycidyl methacrylate; vinyl esters, such as vinyl acetate; vinyl cyanide compounds, such as acrylonitrile and methacrylonitrile; halogenated monomers, such as vinylidene chloride and vinyl chloride; aromatic vinyl monomers, such as styrene, 2-methylstyrene, vinyltoluene, t-butylstyrene, chlorostyrene, vinylanisole, and vinylnaphthalene; olefins, such as ethylene, propylene, and isopropylene; dienes, such as butadiene and chloroprene; and vinyl monomers, such as vinyl ether, vinyl ketone, and vinylpyrrolidone. In the case of monomers not having a carboxyl group, an unsaturated vinyl monomer having a carboxyl group should be used. Preferred examples thereof include acrylic acid, methacrylic acid, itaconic acid, fumaric acid, and maleic acid. Among them, methacrylic acid is preferred. Emulsifiers usable herein include anionic surfactants, nonionic surfactants, and mixtures of these surfactants.

According to the present invention, a structure formed by crosslinking of molecules, derived from the above monomers, with a crosslinkable monomer having two or more polymerizable double bonds is preferred. Specific examples of crosslinkable monomers having two or more polymerizable double bonds include: diacrylate compounds, such as polyethylene glycol diacrylate, triethylene glycol diacrylate, 1,3-butylene glycol diacrylate, 1,6-butylene glycol diacrylate, 1,6-hexanediol diacrylate, neopentyl glycol diacrylate, 1,9-nonanediol diacrylate, polypropylene glycol diacrylate, 2,2'-bis(4-acryloxypropyloxyphenyl)propane, and 2,2'-bis(4-acryloxydiethoxyphenyl)propane; triacrylate compounds, such as trimethylolpropane triacrylate, trimethylolethane triacrylate, and tetramethylolmethane triacrylate; tetraacrylate compounds, such as ditrimethylol tetraacrylate, tetramethylolmethane tetraacrylate, and pentaerythritol tetraacrylate; hexaacrylate compounds, such as dipentaerythritol hexaacrylate; dimethacrylate compounds, such as ethylene glycol dimethacrylate, diethylene glycol dimethacrylate, triethylene glycol dimethacrylate, polyethylene glycol dimethacrylate, 1,3-butylene glycol dimethacrylate, 1,4-butylene glycol dimethacrylate, 1,6-hexanediol dimethacrylate, neopentyl glycol dimethacrylate, dipropylene glycol dimethacrylate, polypropylene glycol dimethacrylate, polybutylene glycol dimethacrylate, and 2,2'-bis(4-methacryloxydiethoxyphenyl)propane; trimeth-acrylate compounds, such as trimethylolpropane trimethacrylate and trimethylolethane trimethacrylate; methylene bisacrylamide; and divinylbenzene.

The addition of acrylamides or hydroxyl-containing monomers besides the above monomers can further improve printing stability. Specific examples of acrylamides include acrylamide and N,N'-dimethylacrylamide. Specific examples of hydroxyl-containing monomers include 2-hydroxyethyl acrylate, 2-hydroxypropyl acrylate, 2-hydroxyethyl methacrylate, and 2-hydroxypropyl methacrylate. They may be used alone or as a mixture of two or more.

The fine particles of a polymer having a core/shell structure may be produced by conventional methods, generally multi-step emulsion polymerization and the like, for example, by a method disclosed in Japanese Patent Laid-Open No. 76004/1992. Specific examples of unsaturated vinyl monomers usable in the polymerization include those described above.

Methods usable for the introduction of epoxy group into the core include a method wherein an epoxy-containing unsaturated vinyl monomer, such as glycidyl acrylate, glycidyl methacrylate, or allylglycidyl ether, is copolymerized with other unsaturated vinyl monomer, and a method wherein, in the polymerization of at least one unsaturated vinyl monomer to prepare core particles, an epoxy compound is simultaneously added to form a composite structure. The former method is preferred from the viewpoints of easiness of the polymerization, polymerization stability and the like.

Initiators, surfactants, and molecular weight regulators commonly used in emulsion polymerization, and neutralizing agents and the like may be used according to a conventional method.

According to the present invention, the fine particles of a polymer may be mixed as fine particles with other ingredients of the ink composition. Preferably, however, fine particles of a polymer are dispersed in water to prepare an aqueous emulsion, followed by mixing with other ingredients of the ink composition.

According to the present invention, conventional aqueous emulsions may also be used as the aqueous emulsion satisfying the above requirements. For example, aqueous emulsions described in Japanese Patent Publication No. 1426/1987 and Japanese Patent Laid-Open Nos. 56573/1991, 79678/1991, 160068/1991, and 18462/1992 may be used.

According to the present invention, the fine particles of a polymer may be mixed as a powder of fine particles with other ingredients of the ink composition. Preferably, however, the fine particles of a polymer are dispersed in a water medium to prepare an aqueous emulsion, followed by mixing with other ingredients of the ink composition.

The content of the fine particles of a polymer is about 0.1 to 40% by weight, preferably about 0.1 to 25% by weight, more preferably about 0.1 to 10% byweigbt, based on the ink composition. The diameter of the fine particles of a polymer is preferably about 10 to 400 nm, more preferably about 50 to 200 nm. The molecular weight of the fine particles of a polymer is preferably not less than 10,000, more preferably not less than 100,000.

### Water, water-soluble organic solvent, and optional ingredients

The solvent in the ink composition according to the present invention is composed mainly of water and a water-soluble organic solvent. The ink composition according to the present invention may contain optional ingredients.

According to a preferred embodiment of the present invention, the ink composition according to the present invention contains a water-soluble organic solvent. Specific examples of water-soluble organic solvents include: alkyl alcohols having 1 to 4 carbon atoms, such as ethanol, methanol, butanol, propanol, and isopropanol; glycol ethers, such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol monomethyl ether, dipropylene glycol monoethyl ether, dipropylene glycol mono-n-propyl ether, and dipropylene glycol mono-iso-propyl ether; formamide; acetamide; dimethyl sulfoxide; sorbit; sorbitan; acetin; diacetin; triacetin; and sulfolane.

According to a preferred embodiment of the present invention, among the water-soluble organic solvents, those having a boiling point of 180°C or above are used. The use of water-soluble organic solvents having a boiling point of 180°C or above can impart water retention and wetting properties to the ink composition. As a result, storage of the ink composition for a long period of time neither causes coagulation of pigment nor an increase in the viscosity of the ink composition. Thus, excellent storage stability can be realized. Further, an ink composition can be realized which, even when allowed to stand in an open state, that is, when allowed to stand in contact with air at room temperature, can maintain the fluidity and the redispersibility for a long period of time, and, in addition, does not cause clogging of nozzles during printing or at the time of restarting after interruption of printing, thus offering high ejection stability.

Specific examples of water-soluble organic solvents having a boiling point of 180°C or above include ethylene glycol (b.p.: 197°C; the boiling point being hereinafter described within parentheses), propylene glycol (187°C), diethylene glycol (245°C), pentamethylene glycol (242°C), trimethylene glycol (214°C), 2-butene-1,4-diol (235°C), 2-ethyl-1,3-hexanediol (243°C), 2-methyl-2,4-pentanediol (197°C), 1-methyl-2-pyrrolidone (202°C), 1,3-dimethyl-2-imidazolidinone (257-260°C), 2-pyrrolidone (245°C), glycerin (290°C), tripropylene glycol monomethyl ether (243°C), dipropylene glycol monoethyl glycol (198°C), dipropylene glycol monomethyl ether (190°C), dipropylene glycol (232°C), triethylene glycol monomethyl ether (249°C), tetraethylene glycol (327°C), triethylene glycol (288°C), diethylene glycol monobutyl ether (230°C), diethylene glycol monoethyl ether (202°C), and diethylene glycol monomethyl ether (194°C). They may be used alone or as a mixture of two or more. According to the present invention, among the water-soluble organic solvents, those having a boiling point of 200°C or above are more preferred.

The content of the water-soluble organic solvent is preferably about 10 to 40% by weight, more preferably 10 to 20% by weight.

According to a preferred embodiment of the present invention, the ink composition according to the present invention contains a saccharide, a tertiary amine, or an alkali hydroxide. The addition of the saccharide and the tertiary amine can impart wetting properties. In particular, the addition of the saccharide can impart, to the ink composition, the effect of maintaining water retention and wetting properties for a long period of time, and thus can realize an ink composition which, when stored for a long period of time, causes neither coagulation of pigment nor an increase in viscosity of the ink composition, that is, has excellent storage stability. Further, the addition of the saccharide can impart, to the ink composition, the effect of maintaining, for a long period of time, fluidity and redispersibility even when the ink composition is allowed to stand in an open state, that is, is allowed to stand in contact with air at room temperature. Furthermore, the addition of the succharide can prevent nozzle clogging during printing or at the time of restarting after printing, thus offering high ejection stability. The addition of the tertiary amine and the alkali hydroxide brings about stable dispersion of the pigment and the fine particles of a polymer in the ink composition. However, it should be noted that the above theory is merely hypothetical and should not be construed as limiting the scope of the present invention.

Specific examples of saccharides usable herein include monosaccharides, disaccharides, oligosaccharides, including trisaccharides and tetrasaccharides, and other polysaccharides, preferably glucose, mannose, fructose, ribose, xylose, arabinose, galactose, aldonic acid, glucitol, sorbitol, maltose, cellobiose, lactose, sucrose, trehalose, and maltotriose. The term polysaccharide" used herein means saccharides in the broad sense as including substances which exist widely in the world of nature, such as alginic acid, a -cyclodextrin, and cellulose. Derivatives of these saccharides usable herein include reducing sugars of the above saccharides, for example, sugar alcohols represented by the general formula HOCH₂(CHOH)ₙCH₂OH, wherein n is an integer of 2 to 5, oxidizing sugars, for example, aldonic acid or uronic acid, amino acids, and thiosugars. Among them, sugar alcohols are particularly preferred, and specific examples thereof include maltitol and sorbitol. The content of the saccharide is preferably about 0.1 to 40% by weight, more preferably about 1 to 30% by weight, based on the ink composition.

Specific examples of tertiary amines include trimethylamine, triethylamine, triethanolamine, dimethylethanolamine, diethylethanolamine, triisopropenolamine, and butyldiethanolamine. They may be used alone or as a mixture of two or more. The amount of the tertiary amine added to the ink composition is preferably about 0.1 to 10% by weight, more preferably about 0.5 to 5% by weight.

Specific examples of alkali hydroxides include potassium hydroxide, sodium hydroxide, and lithium hydroxide, and the amount of the alkali hydroxide added to the ink composition is preferably about 0.01 to 5% by weight, more preferably about 0.05 to 3% by weight.

The ink composition according to the present invention may further comprise a surfactant. Specific examples of surfactants usable herein include: anionic surfactants, for example, sodium dodecylbenzenesulfonate, sodium laurylate, and an ammonium salt of polyoxyethylene alkyl ether sulfates; nonionic surfactants, for example, polyoxyethylene alkyl ethers, polyoxyethylene alkyl esters, polyoxyethylene sorbitan fatty acid esters, polyoxyethylene alkylphenyl ethers, polyoxyethylenealkylamines, and polyoxyethylenealkylamides; and acetylene glycol. They may be used alone or in combination of two or more.

Preferably, the ink composition according to the present invention further contains a glycol ether and/or an acetylene glycol surfactant. Glycol ethers include ethylene glycol monomethyl ether, ethylene glycol monoethyl ether, ethylene glycol monobutyl ether, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, diethylene glycol mono-n-butyl ether, triethylene glycol mono-n-butyl ether, ethylene glycol mono-t-butyl ether, diethylene glycol mono-t-butyl ether, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, dipropylene glycol mono-n-propyl ether, dipropylene glycol mono-iso-propyl ether, propylene glycol mono-n-butyl ether, and dipropylene glycol mono-n-butyl ether.

Specific examples of preferred acetylene glycol surfactants usable in the present invention include compounds represented by formula (VI): 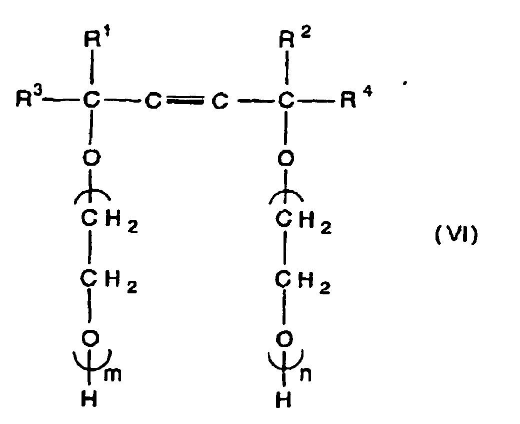 wherein 0 ≦ m + n ≦ 50 and R¹, R², R³, and R⁴ each independently represent an alkyl group, preferably a straight-chain or branched alkyl group having 6 or less carbon atoms.

Among the compounds represented by formula (VI), particularly preferred compounds include 2,4,7,9-tetramethyl-5-decyne-4,7-diol, 3,6-dimethyl-4-octyne-3,6-diol, and 3,5-dimethyl-1-hexyn-3-ol. Commercially available products may also be used as the acetylene glycol surfactant represented by the formula (VI). Specific examples thereof include Surfynol 104, Surfynol 82, Surfynol 465, Surfynol 485, and Surfynol TG (all the above products being available from Air Products and Chemicals Inc.) and OLFINE STG and OLFINE E 1010 (tradenames: manufactured by Nissin Chemical Industry Co., Ltd.).

The amount of the surfactant added is preferably 0.01 to 10% by weight, more preferably 0.1 to 5% by weight, based on the ink composition.

If necessary, the ink compositions may further contain pH adjustors, preservatives, fungicides, etc. from the viewpoint of improving the storage stability.

According to a preferred embodiment of the present invention, the ink composition comprises a water-based dispersion of a pigment encapsulated in a polymer produced from a polymerizable surfactant having both nonionic hydrophilicity and anionic hydrophilicity and a monomer, fine particles of a polymer, acetylene glycol and/or an acetylene alcohol surfactant, at least one compound selected from the group consisting of diethylene glycol monobutyl ether, triethylene glycol monobutyl ether, propylene glycol monobutyl ether, dipropylene glycol monobutyl ether and/or 1,2-alkylene glycols, and water.

Further, according to a preferred embodiment of the present invention, the ink composition comprises preferably 1 to 10% by weight of the water-based dispersion of a pigment encapsulated in a polymer produced from a polymerizable surfactant having both nonionic hydrophilicity and anionic hydrophilicity and a monomer, preferably 0.1 to 10% by weight of the fine particles of a polymer, preferably 0.01 to 10% by weight, more preferably 0.1 to 5% by weight, of the acetylene glycol and/or an acetylene alcohol surfactant, and preferably 0.5 to 20% by weight, more preferably 1 to 10% by weight, of at least one compound selected from the group consisting of diethylene glycol monobutyl ether, triethylene glycol monobutyl ether, propylene glycol monobutyl ether, and dipropylene glycol monobutyl ether.

This ink composition can advantageously yield high-quality images free from feathering or bleeding and having high print density and excellent color development on plain papers and recycled papers, and can yield images having satisfactory rubbing/scratch resistance on plain papers and recycled papers, as well as on other recording media, such as coated papers.

### Ink set

The ink composition according to the present invention may be used with other ink composition(s) to perform image recording. Other ink compositions include black, cyan, magenta, and yellow ink compositions. Thus, according to another aspect of the present invention, there is provided an ink set for ink jet recording, comprising the above ink composition and other ink composition(s). These other ink compositions may be the ink composition according to the present invention or alternatively may be an ink composition produced by other production process. For other ink compositions, the colorant and other composition may be properly determined by taking a printing method into consideration. Printing of a combination of these ink compositions to form images can realize images possessing excellent fast drying properties and rubbing/scratch resistance.

### Ink jet recording method

According to still another aspect of the present invention, there is provided an ink jet recording method comprising the step of depositing a reaction solution and an ink composition onto a recording medium to perform printing.

According to the ink jet recording method of the present invention, contact of the reaction solution with the ink composition can realize good prints. Although the mechanism through which good prints can be realized has not been elucidated yet, the mechanism is believed to be as follows. Upon contact of the reaction solution with the ink composition, the reactant contained in the reaction solution breaks the state of dispersion of the water-based pigment dispersion, the fine particles of a polymer, or other ingredients in the ink composition. This results in coagulation thereof. The coagulate is considered to inhibit the penetration of pigment into the recording medium and to strongly fix the pigment onto the recording medium.

The reaction solution and the ink composition may be applied onto the recording medium in any order. Specifically, suitable methods for the deposition of the reaction solution and the ink composition include a method wherein the ink composition is deposited onto the recording medium after the deposition of the reaction solution onto the recording medium, a method wherein the ink composition is first printed onto the recording medium followed by the deposition of the reaction solution onto the recording medium, and a method wherein the reaction solution and the ink composition are mixed together just before or just after the ejection.

The deposition of the reaction solution onto the recording medium may be carried out by any of a method wherein the reaction solution is selectively deposited onto only an area where the ink composition is deposited, and a method wherein the reaction solution is deposited on the whole area of the recording medium. The former method is cost-effective because the consumption of the reaction solution can be minimized. In this method, however, the accuracy of the position at which both the reaction solution and the ink composition are deposited should be high to some extent. On the other hand, in the latter method, as compared with the former method, the requirement for the accuracy of the position where the reaction solution and the ink composition are deposited is relaxed. In the latter method, however, a larger amount of the reaction solution should be deposited on the whole area of the recording medium. This is often causative of curling of papers upon drying. For this reason, the method to be used may be determined by taking a combination of the ink composition with the reaction solution into consideration. When the former method is adopted, the reaction solution may be deposited by ink jet recording.

### Reaction solution

The reaction solution used in the present invention contains a reactant. The reactant can break the state of dispersion and/or dissolution of pigment particles of the water-based pigment dispersion and/or fine particles of a polymer of the aqueous emulsion in the ink composition to cause coagulation. Specific examples of reactants usable herein include metal salts, polyamines, and polyamine derivatives.

The metal salt usable in the reaction solution is a salt that is constituted by divalent or higher polyvalent metal ions and anions bonded to the polyvalent metal ions and is soluble in water. Specific examples of polyvalent metal ions include divalent metal ions, such as Ca²⁺, Cu²⁺, Ni²⁺, Mg²⁺, Zn²⁺, and Ba²⁺, and trivalent metal ions, such as Al³⁺, Fe³⁺, and Cr³⁺. Anions include Cl⁻, No³⁻, I⁻, Br⁻, ClO³⁻, and CH₃COO⁻.

Especially, a metal salt constituted by Ca²⁺ or Mg²⁺ provides favorable results in terms of pH of the reaction solution and the quality of prints.

The concentration of the polyvalent metal salt in the reaction solution may be suitably determined so as to attain the effect of providing good print quality and preventing clogging. It, however, is preferably about 0.1 to 40% by weight, more preferably about 5 to 25% by weight.

According to a preferred embodiment of the present invention, the polyvalent metal salt contained in the reaction solution is constituted by divalent or higher polyvalent metal ions and nitrate ions or carboxylate ions bonded to the polyvalent metal ions and is soluble in water.

In this case, preferably, the carboxylate ions are derived from a saturated aliphatic monocarboxylic acid having 1 to 6 carbon atoms or a carbocyclic monocarboxylic acid having 7 to 11 carbon atoms. Specific examples of preferred saturated aliphatic monocarboxylic acids having 1 to 6 carbon atoms include formic acid, acetic acid, propionic acid, butyric acid, isobutyric acid, valeric acid, isovaleric acid, pivalic acid, and hexanoic acid. Among them, formic acid and acetic acid are particularly preferred.

A hydrogen atom(s) on the saturated aliphatic hydrocarbon group in the monocarboxylic acid may be substituted by a hydroxyl group. Specific examples of preferred substituted carboxylic acids include lactic acid.

Specific examples of preferred carbocyclic monocarboxylic acids having 6 to 10 carbon atoms include benzoic acid and naphthoic acid with benzoic acid being more preferred.

Polyallylamine and polyallylamine derivative usable in the reaction solution are cationic polymers which are soluble in water and can be positively charged in water. Such polymers include, for example, those represented by the following formulae (VII), (VIII), and (IX): 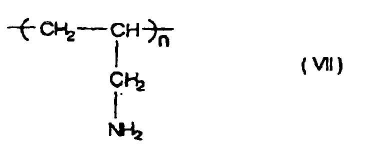 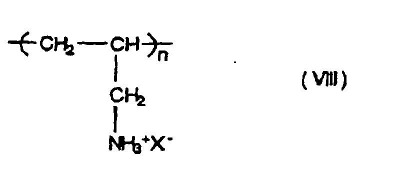 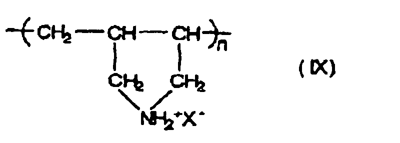 wherein X⁻ represents chloride, bromide, iodide, nitrate, phosphate, sulfate, acetate or other ions.

In addition, a copolymer of an allylamine with a diallylamine and a copolymer of diallylmethylammonium chloride with sulfur dioxide may also be used.

The content of the polyallylamine and the polyallylamine derivative is preferably 0.5 to 10% by weight based on the reaction solution.

According to a preferred embodiment of the present invention, the reaction solution may further contain a polyol in addition to the polyvalent metal salt. The polyol has a vapor pressure of not more than 0.01 mmHg at 20°C, and the amount of the polyol added is such that the weight ratio of the polyol to the polyvalent metal salt is not less than 1, preferably 1.0 to 5.0. Further, according to a preferred embodiment of the present invention, the amount of the polyol added is not less than 10% by weight, more preferably about 10 to 30% by weight, based on the reaction solution.

Specific examples of preferred polyols usable herein include polyhydric alcohols, for example, glycerin, diethylene glycol, triethylene glycol, 1,5-pentanediol, and 1,4-butanediol. Further specific examples of preferred polyols include saccharides, for example, monosaccharides, disaccharides, oligosaccharides including trisaccharides and tetrasaccharides, and other polysaccharides, preferably glucose, mannose, fructose, ribose, xylose, arabinose, galactose, aldonic acid, glucitol, sorbitol, maltose, cellobiose, lactose, sucrose, trehalose, and maltotriose.

These polyols may be added alone or as a mixture of two or more. When the polyols are added as a mixture of two or more, the amount of these polyols added is such that the weight ratio of the total amount of the polyols to the polyvalent metal salt is not less than 1.

According to a preferred embodiment of the present invention, the reaction solution comprises a wetting agent comprising a high-boiling organic solvent. The high-boiling organic solvent functions to prevent the reaction solution from drying out. Specific examples of preferred high-boiling organic solvents usable herein, some of which are described above in connection with the polyol, include: polyhydric alcohols, such as ethylene glycol, diethylene glycol, triethylene glycol, polyethylene glycol, polypropylene glycol, propylene glycol, butylene glycol, 1,2,6-hexanetriol, thioglycol, hexylene glycol, glycerin, trimethylolethane, and trimethylolpropane; alkyl ethers of polyhydric alcohols, such as ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, and triethylene glycol monobutyl ether; urea; 2-pyrrolidone; N-methyl-2-pyrrolidone; 1,3-dimethyl-2-imidazolidinone; and triethanolamine. According to a preferred embodiment of the present invention, the reaction solution may contain triethylene glycol monobutyl ether and glycerin in combination.

Although the amount of the high-boiling organic solvent added is not particularly limited, it is preferably about 0.5 to 40% by weight, more preferably about 2 to 20% by weight, based on the reaction solution.

According to a preferred embodiment of the present invention, the reaction solution may further contain a low-boiling organic solvent. Specific examples of preferred low-boiling organic solvents usable herein include methanol, ethanol, n-propyl alcohol, iso-propyl alcohol, n-butanol, sec-butanol, tert-butanol, iso-butanol, and n-pentanol. Monohydric alcohols are particularly preferred. The low-boiling organic solvent has the effect of shortening the time required for drying the ink composition. The amount of the low-boiling organic solvent added is preferably 0.5 to 10% by weight, more preferably 1.5 to 6% by weight, based on the reaction solution.

According to a preferred embodiment of the present invention, the reaction solution may further contain a penetrating agent. Penetrating agents usable herein include various surfactants, such as anionic, cationic, and amphoteric surfactants; alcohols, such as methanol, ethanol, and iso-propyl alcohol; and lower alkyl ethers of polyhydric alcohols, such as ethylene glycol monomethyl ether, diethylene glycol monoethyl ether, diethylene glycol monobutyl ether, triethylene glycol monobutyl ether, propylene glycol monobutyl ether, and dipropylene glycol monobutyl ether.

More preferred penetrating agents usable in the present invention are compounds represented by formula (VI) and/or lower alcohol ethers of polyhydric alcohols. 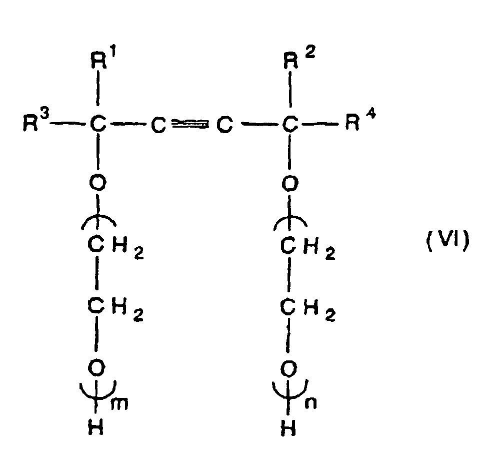 wherein 0 ≦ m + n ≦ 50 and R¹, R², R³, and R⁴ each independently represent an alkyl group.

Among the compounds represented by formula (VI), preferred compounds include 2,4,7,9-tetramethyl-5-decyne-4,7-diol, 3,6-dimethyl-4-octyne-3,6-diol, and 3,5-dimethyl-1-hexyn-3-ol. Commercially available products may also be used as the acetylene glycol surfactant represented by formula (VI). Specific examples thereof include Surfynol 104, Surfynol 82, Surfynol 440, Surfynol 465, Surfynol 485, and Surfynol TG (all the above products being available from Air Products and Chemicals Inc.) and OLFINE STG and OLFINE E 1010 (tradenames: manufactured by Nissin Chemical Industry Co., Ltd.). They may be used alone or as a mixture of two or more.

According to a preferred embodiment of the present invention, the reaction solution contains triethanolamine for pH adjustment purposes. The amount of the triethanolamine added is preferably about 0 to 2.0% by weight.

### Ink composition

The ink composition as described above in connection with one aspect of the present invention may be used in the recording method according to the present invention. The composition, preparation and the like may be the same as those described above.

### Ink jet recording apparatus

A recording apparatus for carrying out the recording method according to the present invention will be described with reference to the accompanying drawings.

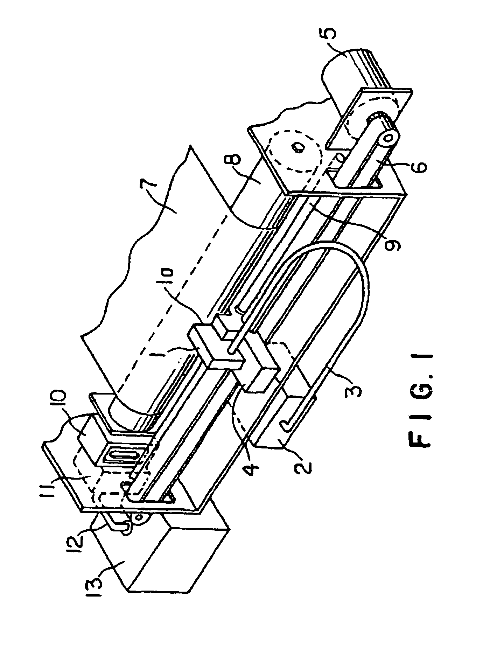

Fig. 1 is a diagram showing an embodiment of an ink jet recording apparatus. In this embodiment, an ink composition and a reaction solution are accommodated in a tank and fed into a recording head through an ink tube. Specifically, a recording head 1 is communicated with an ink tank 2 through an ink tube 3. In this case, the interior of the ink tank 2 is partitioned, and a chamber for an ink composition, optionally a plurality of chambers respectively for a plurality of color ink compositions, and a chamber for a reaction solution are provided.

The recording head 1 is moved along a carriage 4 by means of a timing belt 6 driven by a motor 5. On the other hand, a recording medium 7 is placed by a platen 8 and a guide 9 at a position facing the recording head 1. In this embodiment, a cap 10 is provided. A suction pump 11 is connected to the cap 10 in order to conduct the so-called "cleaning operation." The ink composition sucked by the suction pump 11 is resorvoired in a waste ink tank 13 through a tube 12.

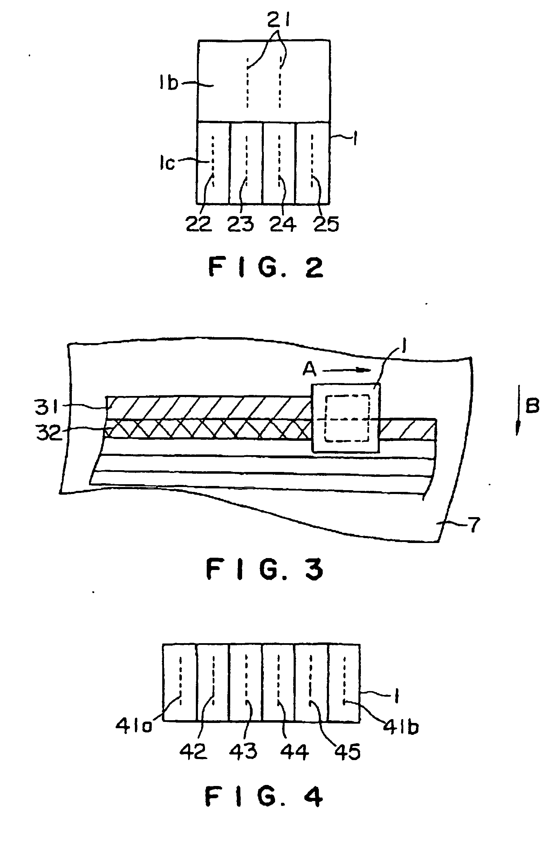

Fig. 2 is an enlarged view showing the surface of nozzles for the recording head 1. In the drawing, the surface of a nozzle for a reaction solution is indicated by 1b, and a nozzle 21 for ejecting the reaction solution is provided in the longitudinal direction. On the other hand, the surface of nozzles for the ink composition is indicated by 1c, and a yellow ink composition, a magenta ink composition, a cyan ink composition, and a black ink composition are ejected respectively through nozzles 22, 23, 24, and 25.

Further, an ink jet recording method using the recording head shown in Fig. 2 will be described with reference to Fig. 3. The recording head 1 is moved in the direction indicated by an arrow A, during which time the reaction solution is ejected through the nozzle surface 1b to form a reaction solution-deposited region 31 in a band form on the recording medium 7. Subsequently, the recording medium 7 is transferred by a predetermined extent in the recording medium feed direction indicated by an arrow B, during which time the recording head 1 is moved in the direction opposite to that indicated by the arrow A in the drawing and returned to the left end of the recording medium 7, and the recording head 1 conducts printing using the ink composition on the reaction solution-deposited region, thereby forming a print region 32.

Further, as shown in Fig. 4, in the recording head 1, it is also possible to arrange all nozzles in the lateral direction to construct a nozzle assembly. In the drawing, ejection nozzles for a reaction solution are denoted by 41a and 41b, and a yellow ink composition, a magenta ink composition, a cyan ink composition, and a black ink composition are ejected respectively through nozzles 42, 43, 44, and 45. In the recording head according to this embodiment, the recording head 1, when reciprocated on the carriage, can conduct printing in both directions. Therefore, in this case, printing at a higher speed can be expected as compared with the case where the recording head shown in Fig. 2 is used.

Regulating the surface tension of the reaction solution and the ink composition preferably by the above method enables a high-quality print to be more stably provided independently of the order of depositing the reaction solution and the ink composition. In this case, the use of only one ejection nozzle for the reaction solution suffices for desired results (for example, the nozzle indicated by numeral 41b in the drawing may be omitted), leading to a further reduction in size of head and an increase in printing speed.

In the ink jet recording apparatus, the supplement of the ink composition may be carried out by replacing a cartridge as an ink tank. The ink tank may be integral with the recording head.

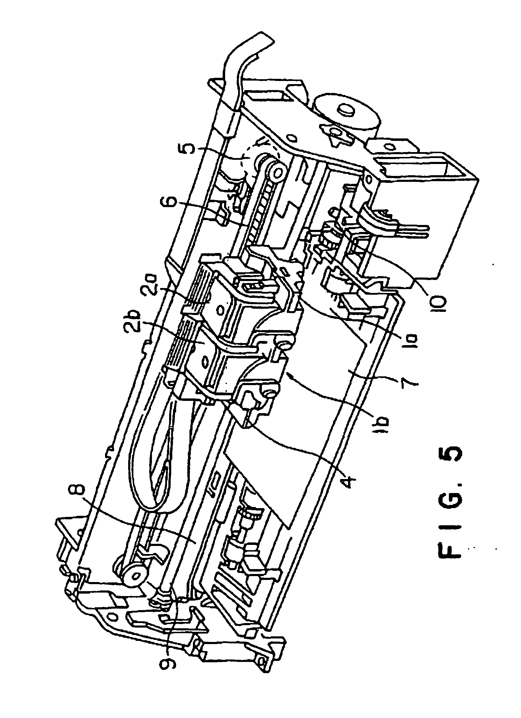

A preferred embodiment of an ink jet recording apparatus using such an ink tank is shown in Fig. 5. In the drawing, the same members as used in the apparatus shown in Fig. 1 have the same reference numerals. In the embodiment shown in Fig. 5, recording heads 1a and 1b are integral respectively with ink tanks 2a and 2b. An ink composition and a reaction solution are ejected respectively through the recording heads 1a and 1b. Basically, printing may be conducted in the same manner as described above in connection with the apparatus shown in Fig. 1. Further, in this embodiment, the recording head 1a is moved together with the ink tank 2a on a carriage 4, while the recording head 1b is moved together with the ink tank 2b on the carriage 4.

### EXAMPLES

The present invention will be described in more detail with reference to the following examples, though it is not limited to these examples only.

### Preparation of pigment dispersions

### Pigment Dispersion 1

Dispersion 1 of pigment was prepared in the same manner as described in Example 1 of Japanese Patent Laid-Open No. 316909/1998. Specifically, a reaction vessel equipped with an ultrasonic generator, a stirrer, and a temperature controller was charged with 5 parts by weight of carbon black, 3 parts by weight of a polymerizable surfactant represented by formula (II) described in the above publication, and 80 parts by weight of water. Ultrasonic waves were applied to the mixture in the reaction vessel for 4 hr to comminute the mixture. Next, 1.6 parts by weight of acrylonitrile and 0.05 part by weight of potassium persulfate were further added to the reaction vessel, and a polymerization reaction was allowed to proceed at 60°C for 48 hr. The desired product thus obtained was filtered through a 0.4-µm filter to remove coarse particles. Thus, the dispersion of pigment was prepared. Adeka Reasoap SE-10N (number of moles of ethylene oxide added 10, purity 100%, manufactured by Asahi Denka Kogyo Ltd.) was used as the polymerizable surfactant represented by formula (II) described in Japanese Patent Laid-Open No. 316909/1998.

### Pigment Dispersion 2

Carbon black (100 g) and 60 g of a polymerizable surfactant SE-10N manufactured by Asahi Denka Kogyo Ltd. were added to 1,000 g of ion-exchanged water. Ultrasonic waves generated by an ultrasonic generator were applied to the mixture for 2 hr to perform dispersion, followed by dispersion in a sand mill for additional about 2 hr. The dispersion was introduced into a reaction vessel equipped with an ultrasonic generator, a stirrer, a temperature controller, a reflux condenser, and a dropping funnel. A mixed monomer solution previously prepared by mixing 20 g of phenoxyethyl methacrylate, 10 g of butyl methacrylate, and 10 g of methacrylic acid together and 1 g of potassium persulfate were further added to the reaction vessel, and a polymerization reaction was allowed to proceed at 60°C for 48 hr. The desired product thus obtained was adjusted to pH 8 by the addition of potassium hydroxide, and then passed through a 0.4-µm filter to remove coarse particles. Thus, the contemplated dispersion of pigment was prepared.

### Magenta pigment pispersion

C.I. Pigment Red 12 (100 g) and 60 g of a polymerizable surfactant SE-10N manufactured by Asahi Denka Kogyo Ltd. were added to 1,000 g of ion-exchanged water. Ultrasonic waves generated by an ultrasonic generator were applied to the mixture for 2 hr to perform dispersion, followed by dispersion in a sand mill for additional about 2 hr. The dispersion was introduced into a reaction vessel equipped with an ultrasonic generator, a stirrer, a temperature controller, a reflux condenser, and a dropping funnel. A mixed monomer solution previously prepared by mixing 5 g of benzyl methacrylate, 15 g of butyl methacrylate, 10 g of dicyclopentanyl dimethacrylate, and 10 g of methacrylic acid together and 1 g of potassium persulfate were further added to the reaction vessel, and a polymerization reaction was allowed to proceed at 60°C for 48 hr. The desired product thus obtained was adjusted to pH 8 by the addition of potassium hydroxide, and then passed through a 0.4-µm filter to remove coarse particles. Thus, the contemplated dispersion of magenta pigment was prepared.

### Cyan pigment Dispersion

C.I. Pigment Blue 15 : 3 (100 g) and 60 g of a polymerizable surfactant SE-10N manufactured by Asahi Denka Kogyo Ltd. were added to 1,000 g of ion-exchanged water. Ultrasonic waves generated by an ultrasonic generator were applied to the mixture for 2 hr to perform dispersion, followed by dispersion in a sand mill for additional about 2 hr. The dispersion was introduced into a reaction vessel equipped with an ultrasonic generator, a stirrer, a temperature controller, a reflux condenser, and a dropping funnel. A mixed monomer solution previously prepared by mixing 10 g of 2-acrylamido-2-methylpropanesulfonic acid, 10 g of acrylonitrile, 10 g of benzyl methacrylate, and 10 g of butyl methacrylate together and 1 g of potassium persulfate were further added to the reaction vessel, and a polymerization reaction was allowed to proceed at 60°C for 48 hr. The desired product thus obtained was adjusted to pH 8 by the addition of potassium hydroxide, and then passed through a 0.4-µm filter to remove coarse particles. Thus, the contemplated dispersion of cyan pigment was prepared.

### Yellow pigment Dispersion

C.I. Pigment Yellow 185 (100 g) and 60 g of a polymerizable surfactant SE-10N manufactured by Asahi Denka Kogyo Ltd. were added to 1,000 g of ion-exchanged water. Ultrasonic waves generated by an ultrasonic generator were applied to the mixture for 2 hr to perform dispersion, followed by dispersion in a sand mill for additional about 2 hr. The dispersion was introduced into a reaction vessel equipped with an ultrasonic generator, a stirrer, a temperature controller, a reflux condenser, and a dropping funnel. A mixed monomer solution previously prepared by mixing 20 g of acrylonitrile and 20 g of dibutyl fumarate together and 1 g of potassium persulfate were further added to the reaction vessel, and a polymerization reaction was allowed to proceed at 60°C for 48 hr. The desired product thus obtained was adjusted to pH 8 by the addition of potassium hydroxide, and then passed through a 0.4-µm filter to remove coarse particles. Thus, the contemplated dispersion of yellow pigment was prepared.

### Preparation of fine particles of a polymer

### Fine particles of a polymer 1

A flask equipped with a stirrer, a thermometer, a reflux condenser, and a dropping funnel was charged with 0.5 part by weight of potassium persulfate and 80 parts by weight of pure water to prepare a solution. The flask was heated while stirring the solution to raise the internal temperature to 70°C. Separately, 40 parts by weight of styrene, 45 parts by weight of butyl acrylate, 5 parts by weight of methacrylic acid, 1 part by weight of 2-hydroxyethyl acrylate, 1 part by weight of 1,6-hexanediol dimethacrylate, 1 part by weight of sodium laurylsulfate, and 40 parts by weight of pure water were stirred to mix them together. Thus, an emulsion was prepared. This emulsion was gradually added dropwise to the flask through the dropping funnel over a period of 3 hr to allow a polymerization reaction to proceed. The aqueous emulsion of fine particles of a polymer thus obtained was adjusted to solid content 35% by weight and pH 8 by the addition of ion-exchanged water and aqueous ammonia, and then passed through a 0.2-µm filter. The average particle diameter was measured by a laser scattering method and found to be 180 nm. The aqueous emulsion of fine particles of a polymer had a minimum film-forming temperature of 20°C. When 3 volumes of an aqueous emulsion containing 0.1% by weight of the fine particles of a polymer was brought into contact with one volume of a 1 mol/liter aqueous magnesium nitrate solution, the time required for the transmission of light having a wavelength of 700 nm to become 50% of the initial value (half-value period) was 500 sec. The contact angle of an aqueous emulsion, prepared so as to contain 10% by weight of the fine particles of a polymer, on a teflon sheet was 80 degrees.

### Fine particles of a polymer 2

A reaction vessel equipped with a stirrer, a thermometer, a reflux condenser, and a dropping funnel was charged with 100 g of ion-exchanged water and 1.5 g of potassium persulfate. The internal temperature of the reaction vessel was raised to 70°C under stirring while replacing the air in the reaction vessel by nitrogen. Separately, 100 g of ion-exchanged water, 2 g of sodium dodecylbenzenesulfonate, 60 g of styrene, 80 g of n-lauryl methacrylate, 10 g of methacrylic acid, and 5 g of acrylamide were stirred to mix them together. Thus, an emulsion was prepared. This emulsion was gradually added dropwise to the reaction vessel through the dropping funnel. The aqueous emulsion of fine particles of a polymer thus obtained was cooled to room temperature, adjusted to solid content 35% by weight and pH 8 by the addition of ion-exchanged water and aqueous ammonia, and then passed through a 0.1-µm filter. The average particle diameter was measured by a laser scattering method and found to be 90 nm. The aqueous emulsion of fine particles of a polymer had a minimum film-forming temperature of 23°C. When 3 volumes of an aqueous emulsion containing 0.1% by weight of the fine particles of a polymer was brought into contact with one volume of a 1 mol/liter aqueous magnesium nitrate solution, the time required for the transmission of light having a wavelength of 700 nm to become 50% of the initial value (half-value period) was 30 sec. The contact angle of an aqueous emulsion, prepared so as to contain 10% by weight of the fine particles of a polymer, on a teflon sheet was 83 degrees.

### Fine particles of a polymer 3

A reaction vessel equipped with a stirrer, a thermometer, a reflux condenser, and a dropping funnel was charged with 900 g of ion-exchanged water and 4 g of sodium laurylsulfate. The internal temperature of the reaction vessel was raised to 70°C under stirring while replacing the air in the reaction vessel by nitrogen. While maintaining the internal temperature of the reaction vessel at 70°C, 2 g of potassium persulfate as a polymerization initiator was added to and dissolved in the system. An emulsion previously prepared by adding 450 g of ion-exchanged water, 3 g of sodium laurylsulfate, 435 g of styrene, 20 g of acrylamide, 475 g of butyl acrylate, 30 g of methacrylic acid, and 10 g of ethylene glycol dimethacrylate with stirring was then continuously added dropwise to the reaction vessel over a period of 3 hr. After the completion of the dropwise addition, aging was carried out for 3 hr.

The aqueous emulsion of fine particles of a polymer thus obtained was cooled to room temperature, adjusted to solid content 35% by weight and pH 8 by the addition of ion-exchanged water and aqueous ammonia, and then passed through a 0.1-µm filter. The average particle diameter was measured by a laser scattering method and found to be 80 nm. The aqueous emulsion of fine particles of a polymer had a minimum film-forming temperature of 22°C. When 3 volumes of an aqueous emulsion containing 0.1% by weight of the fine particles of a polymer was brought into contact with one volume of a 1 mol/liter aqueous magnesium nitrate solution, the time required for the transmission of light having a wavelength of 700 nm to become 50% of the initial value (half-value period) was 5 sec. The contact angle of an aqueous emulsion, prepared so as to contain 10% by weight of the fine particles of a polymer, on a teflon sheet was 113 degrees.

### Fine particles of a polymer 4

A reaction vessel equipped with a stirrer, a thermometer, a reflux condenser, and a dropping funnel was charged with 900 g of ion-exchanged water and 4 g of sodium laurylsulfate. The internal temperature of the reaction vessel was raised to 70°C under stirring while replacing the air in the reaction vessel by nitrogen. While maintaining the internal temperature of the reaction vessel at 70°C, 8 g of potassium persulfate as a polymerization initiator was added to and dissolved in the system. An emulsion previously prepared by adding 450 g of ion-exchanged water, 3 g of sodium laurylsulfate, 435 g of styrene, 475 g of butyl acrylate, 15 g of 2-acryloylamino-2-methylpropanesulfonic acid, 30 g of methacrylic acid, and 10 g of diethylene glycol dimethacrylate under stirring was then continuously added dropwise to the reaction vessel over a period of 3 hr. After the completion of the dropwise addition, aging was carried out for 3 hr.

The aqueous emulsion of fine particles of a polymer thus obtained was cooled to room temperature, adjusted to solid content 35% by weight and pH 8 by the addition of ion-exchanged water and aqueous ammonia, and then passed through a 0.1-µm filter. The average particle diameter was measured by a laser scattering method and found to be 90 nm. The aqueous emulsion of fine particles of a polymer had a minimum film-forming temperature of 20°C. When 3 volumes of an aqueous emulsion containing 0.1% by weight of the fine particles of a polymer was brought into contact with one volume of a 1 mol/liter aqueous magnesium nitrate solution, the time required for the transmission of light having a wavelength of 700 nm to become 50% of the initial value (half-value period) was 7 sec. The contact angle of an aqueous emulsion, prepared so as to contain 10% by weight of the fine particles of a polymer, on a teflon sheet was 115 degrees.

### Fine particles of a polymer 5

A reaction vessel equipped with a stirrer, a thermometer, a reflux condenser, and a dropping funnel was charged with 900 g of ion-exchanged water. The internal temperature of the reaction vessel was raised to 70°C while replacing the air in the reaction vessel by nitrogen under stirring. While holding the internal temperature of the reaction vessel at 70°C, 3.5 g of potassium persulfate as a polymerization initiator was added to and dissolved in the system. An emulsion previously prepared by adding 70 g of ion-exchanged water, 1 g of sodium laurylsulfate, 53 g of styrene, 59 g of butyl acrylate, and 0.16 g of t-dodecylmercaptan as a molecular weight modifier under stirring was then continuously added dropwise to the reaction vessel over a period of one hr. After the completion of the dropwise addition, aging was carried out for one hr. Subsequently, an emulsion previously prepared by adding 79 g of styrene, 80 g of butyl acrylate, and 0.16 g of t-dodecylmercaptan to 70 g of ion-exchanged water, 1 g of sodium laurylsulfate, and 1 g of acrylamide under stirring was continuously added dropwise to the reaction vessel over a period of one hr. After the completion of the dropwise addition, aging was carried out for one hr. An aqueous solution of 3.5 g of ammonium persulfate as a polymerization initiator dissolved in 20 g of ion-exchanged water was then added to the reaction vessel. Further, an emulsion previously prepared by adding 300 g of ion-exchanged water, 2 g of sodium laurylsulfate, 16 g of acrylamide, 298 g of styrene, 297 g of butyl acrylate, 29 g of methacrylic acid, 30 g of diethylene glycol dimethacrylate, and 0.65 g of t-dodecylmercaptan under stirring was continuously added dropwise to the reaction vessel over a period of 3 hr. The aqueous emulsion of fine particles of a polymer thus obtained was cooled to room temperature, adjusted to solid content 35% by weight and pH 8 by the addition of ion-exchanged water and aqueous ammonia, and then passed through a 0.1-µm filter. The average particle diameter was measured by a laser scattering method and found to be 90 nm. The aqueous emulsion of fine particles of a polymer had a minimum film-forming temperature of 23°C. When 3 volumes of an aqueous emulsion containing 0.1% by weight of the fine particles of a polymer was brought into contact with one volume of a 1 mol/liter aqueous magnesium nitrate solution, the time required for the transmission of light having a wavelength of 700 nm to become 50% of the initial value (half-value period) was 6 sec. The contact angle of an aqueous emulsion, prepared so as to contain 10% by weight of the fine particles of a polymer, on a teflon sheet was 114 degrees.

### Fine particles of a polymer 6

A reaction vessel equipped with a stirrer, a thermometer, a reflux condenser, and a dropping funnel was charged with 900 g of ion-exchanged water. The internal temperature of the reaction vessel was raised to 70°C while replacing the air in the reaction vessel by nitrogen under stirring. While holding the internal temperature of the reaction vessel at 70°C, 4 g of potassium persulfate as a polymerization initiator was added to and dissolved in the system. An emulsion previously prepared by adding 70 g of ion-exchanged water, 1 g of sodium laurylsulfate, 53 g of styrene, 59 g of butyl acrylate, 48 g of glycidyl methacrylate, and 0.16 g of t-dodecylmercaptan as a molecular weight modifier under stirring was then continuously added dropwise to the reaction vessel over a period of one hr. After the completion of the dropwise addition, aging was carried out for one hr. Subsequently, an emulsion previously prepared by adding 79 g of styrene, 80 g of butyl acrylate, and 0.16 g of t-dodecylmercaptan to 70 g of ion-exchanged water, 1 g of sodium laurylsulfate, and 1 g of acrylamide under stirring was continuously added dropwise to the reaction vessel over a period of one hr. After the completion of the dropwise addition, aging was carried out for one hr.

An aqueous solution of 4 g of ammonium persulfate as a polymerization initiator dissolved in 20 g of ion-exchanged water was then added to the reaction vessel. Further, an emulsion previously prepared by adding 300 g of ion-exchanged water, 2 g of sodium laurylsulfate, 16 g of acrylamide, 298 g of styrene, 297 g of butyl acrylate, 29 g of methacrylic acid, and 0.65 g of t-dodecylmercaptan under stirring was continuously added dropwise to the reaction vessel over a period of 3 hr. The aqueous emulsion of fine particles of a polymer thus obtained was cooled to room temperature, adjusted to solid content 35% by weight and pH 8 by the addition of ion-exchanged water and aqueous ammonia, and then passed through a 0.1-µm filter. The average particle diameter was measured by a laser scattering method and found to be 90 nm. The aqueous emulsion of fine particles of a polymer had a minimum film-forming temperature of 24°C. When 3 volumes of an aqueous emulsion containing 0.1% by weight of the fine particles of a polymer was brought into contact with one volume of a 1 mol/liter aqueous magnesium nitrate solution, the time required for the transmission of light having a wavelength of 700 nm to become 50% of the initial value (half-value period) was 10 sec. The contact angle of an aqueous emulsion, prepared so as to contain 10% by weight of the fine particles of a polymer, on a teflon sheet was 108 degrees.

### Preparation of ink compositions

Ink compositions as shown in Table 1 below were prepared according to the following procedure. Ion-exchanged water, a water-soluble organic solvent, an acetylene glycol surfactant and the like and optional additives, such as a pH adjustor, a preservative, and a fungicide, were previously added and mixed together while stirring at room temperature to prepare a liquid mixture. The stirring liquid mixture was then gradually added to a predetermined amount of the aqueous emulsion of fine particles of a polymer under stirring, followed by stirring for one hr. This was then gradually added to a predetermined amount of the dispersion of pigment under stirring, and the mixture was thoroughly stirred for additional one hr and then passed through a 5-µm membrane filter to prepare an ink composition.

### Comparative Example 1

Carbon black (5% by weight), 3% by weight of an ammonium salt of a styrene/acrylic acid copolymer (molecular weight 8,000, polymer component 38%) as a dispersant, and 20% by weight of water were dispersed in a sand mill. Glycerin (10% by weight), 2% by weight of a nonionic surfactant Noigen EA-160 (manufactured by Dai-ichi Kogyo Seiyaku Co., Ltd.), and water (balance) were then added thereto to prepare an ink.

### Comparative Example 2

Carbon black (5% by weight), 3% by weight of an ammonium salt of a styrene/acrylic acid copolymer (molecular weight 7,000, polymer component 38%) as a dispersant, and 20% by weight of water were dispersed in a sand mill. Glycerin (10% by weight), 2% by weight of a nonionic surfactant Noigen EA-160 (manufactured by Dai-ichi Kogyo Seiyaku Co., Ltd.), 3% by weight of a styrene/acrylic polymer emulsion Microgel E-5002 (manufactured by Nippon Paint Co., Ltd.), and water (balance) were then added thereto to prepare an ink.

### Preparation of reaction solutions

Reaction solutions were prepared according to the following formulations.

| Reaction solution 1 | |
|---|---|
| Magnesium nitrate hexahydrate | 25 wt% |
| Triethylene glycol monobutyl ether | 10 wt% |
| Glycerin | 20 wt% |
| Ion-exchanged water | Balance |

| Reaction solution 2 | |
|---|---|
| Magnesium acetate tetrahydrate | 25 wt% |
| Triethylene glycol monobutyl ether | 10 wt% |
| Glycerin | 20 wt% |
| Ion-exchanged water | Balance |

| Reaction solution 3 | |
|---|---|
| Polyallylamine represented by formula (VII) | 5 wt% |
| Triethylene glycol monobutyl ether | 10 wt% |
| Glycerin | 20 wt% |
| Ion-exchanged water | Balance |

### Evaluation test 1

The ink compositions prepared above were evaluated by the following tests. The results of evaluation were as shown in Tables 2 and 3 below. In the tests, printing was carried out as follows. Specifically, letters were printed on the following papers by means of an ink jet printer PM-670C manufactured by Seiko Epson Corporation. The ink density was 720 dpi. The

following papers were used for the printing tests.
Xerox P, manufactured by Xerox Corp.
Xerox 4024, manufactured by Xerox Corp.
Xerox R (recycled paper), manufactured by Xerox Corp.
Yamayuri (recycled paper), manufactured by Honshu Paper Co., Ltd.

### Ejection stability

The ink composition was loaded into the printer, and alphameric characters were continuously printed. At that time, inspection was performed on dropouts of dots and scattering of ink to determine the time required for dropouts of dots and scattering of ink to occur 10 times in total. The results were evaluated according to the following criteria.
A: 48 hr or more
B: 24 hr to less than 48 hr
C: 1 hr to less than 24 hr

### Anti-clogging property

The ink composition was loaded into the printer, and alphameric characters were continuously printed for 10 min. Thereafter, the printer was stopped, and allowed to stand for one week without capping under an environment of temperature 40°C and humidity 25%. After the standing, alphameric characters were printed again to determine the number of cleaning operations necessary for print quality equal to that before the standing to be obtained. The results were evaluated according to the following criteria.
A: Print quality equal to the initial print quality could be obtained after 0 to 2 cleaning operations.
B: Print quality equal to the initial print quality could be obtained after 3 to 5 cleaning operations.
C: Print quality equal to the initial print quality could not be obtained even after 6 or more cleaning operations.

### Rubbing/scratch resistance

The ink composition was loaded into the printer, and alphameric characters were continuously printed on the test papers. The prints thus obtained were air dried for 1 hr, and the printed characters were then rubbed with a water-base yellow fluorescent marker pen (ZEBRA PEN 2 (trademark)) manufactured by ZEBRA at a marking force of 4.9 x 10⁵ N/m², followed by visual inspection for staining. The results were evaluated according to the following criteria.
A: For all the papers, rubbing twice caused no stain.
B: For some of the papers, rubbing twice caused stain, although rubbing once caused no stain.
C: For some of the papers, rubbing once caused stain.

### Dispersion stability

Each ink composition was stored at 60°C for one week. The viscosity of the ink composition before the storage and the viscosity of the ink composition after the storage, that is, the initial viscosity of the ink composition and the viscosity of the ink composition one week after the initiation of the storage, were measured. The ratio of the viscosity after one week to the initial viscosity was determined. The closer the viscosity ratio to 1, the better the dispersion stability.

### Print quality

The ink composition was loaded into the printer, and letters were printed on the following printing papers. The prints were visually inspected for feathering. The results were evaluated according to the following criteria.
A: Feathering observed.
B: Feathering slightly observed.
C: Feathering significantly observed.

The following printing papers were used for the evaluation.
Conqueror
Favorit, manufactured by Xerox Corp.
Modo
Rapid Copy, manufactured by Igepa Artikel
EPSON EPP, manufactured by Seiko Epson Corporation
Xerox P, manufactured by Xerox Corp.
Xerox 4024, manufactured by Xerox Corp.
Xerox 10, manufactured by Xerox Corp.
Neenha Bond, manufactured by Kinbery-Clark
Ricopy 6200, manufactured by Ricoh Co., Ltd.
Yamayuri (recycled paper), manufactured by Honshu Paper Co., Ltd.

### Print density (OD value)

For the prints formed by the above printing, the reflection OD value of the blotted image portion was measured with Macbeth TR 972 manufactured by Macbeth. The average of the measurements was determined.

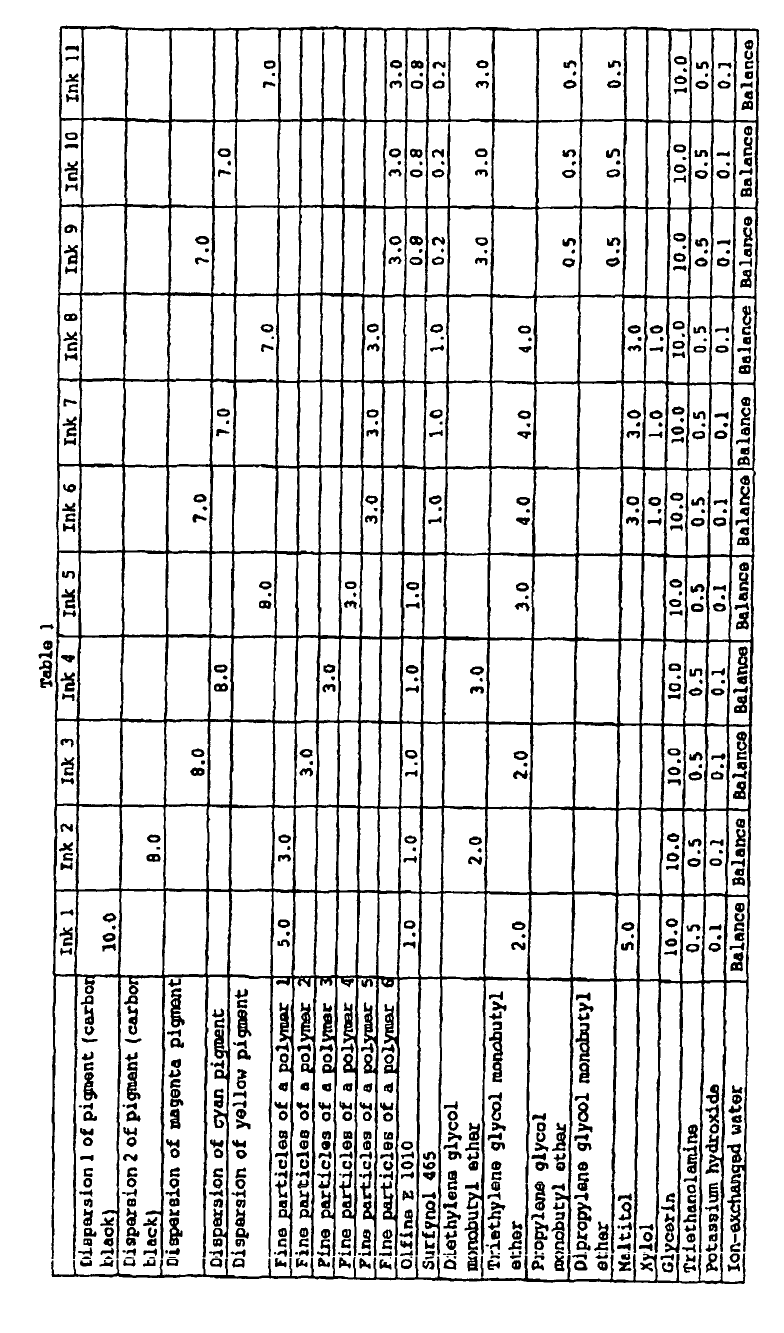

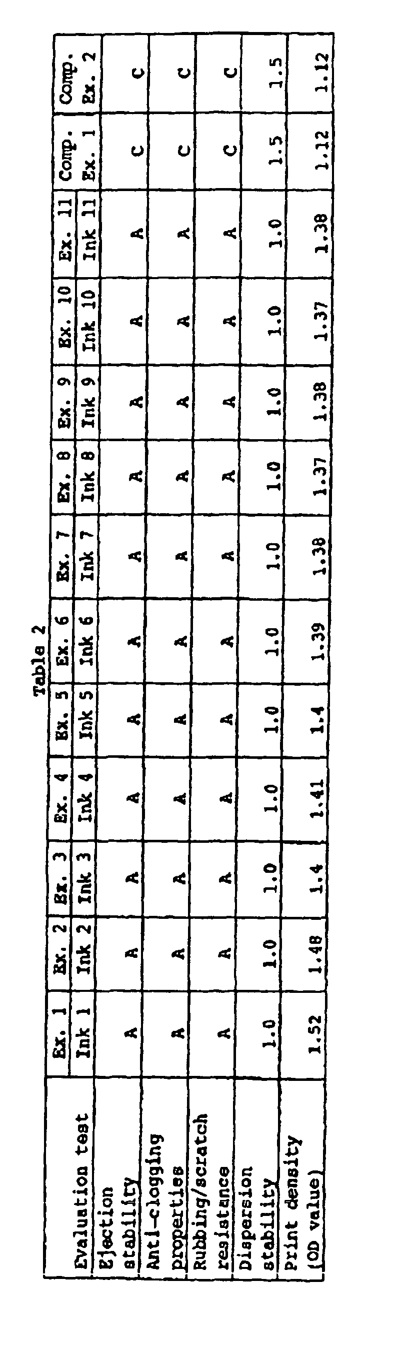

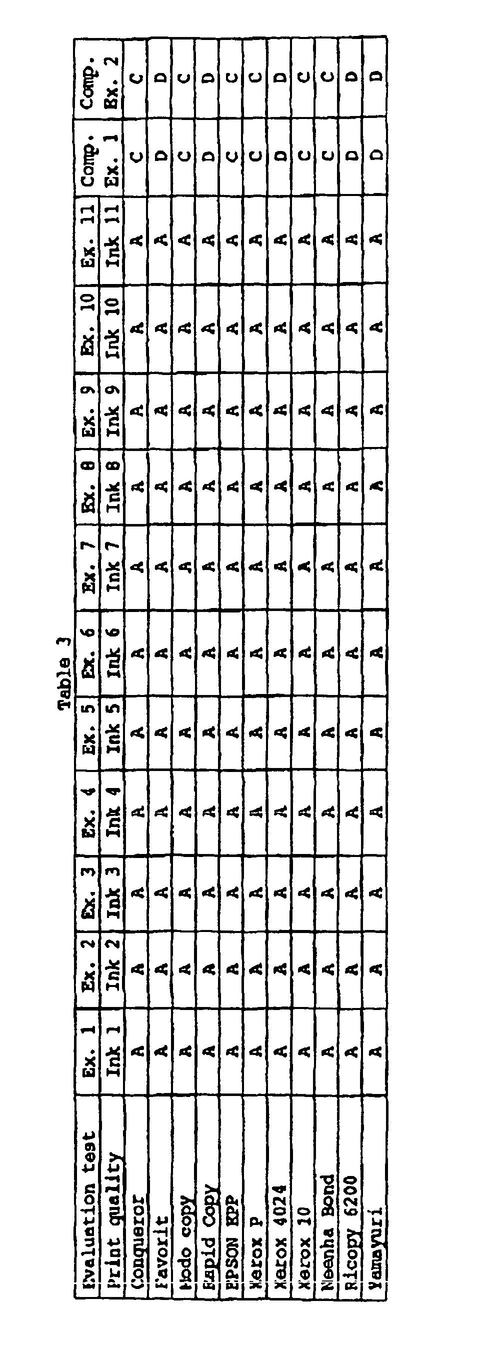

### Evaluation test 2

Prints produced by an ink jet recording method, wherein droplets of the ink composition and droplets of the reaction solution were ejected and deposited onto a recording medium to provide a record, were evaluated as follows. Ink compositions, reaction solution, and the results of evaluation were as summarized in Tables 4 to 6 below.

For the printing, an ink jet recording apparatus as shown in Fig. 5, provided with a recording head shown in Fig. 4, was used. The ink jet recording apparatus performs printing by depositing, on a recording medium, an ink composition and a reaction solution containing a reactant capable of producing coagulate upon contact with the ink composition, and comprises: means for depositing the reaction solution onto the recording medium; means for depositing the ink composition onto the recording medium to record an image; and ink jet recording means for controlling means for depositing the reaction solution onto the recording medium and means for depositing the ink composition onto the recording medium to record an image.

In the printing, immediately after the reaction solution was allowed to impact against the test paper by means of the ink jet recording apparatus, the ink composition was allowed to impact against the position where the reaction solution impacted, thereby printing a blotted image (100% duty). The amount of the ink composition ejected and the amount of the reaction solution ejected each were 0.07 µg/dot, and the density was 360 dpi. The following printing papers were used in the printing.
Xerox P, manufactured by Xerox Corp.
Ricopy 6200, manufactured by Ricoh Co., Ltd.
Xerox 4024, manufactured by Xerox Corp.
Neenha Bond, manufactured by Kimberly-Clark
Xerox R, manufactured by Xerox Corp.

### Evaluation 1: Print quality

The ink composition was loaded into the ink jet recording apparatus, and alphabetical characters (24 characters) were continuously printed. For the printed alphabetical characters, the total number of feathered characters in the prints was counted.

The results were evaluated according to the following criteria.
A: The total number of feathered characters was less than 350.
B: The total number of feathered characters was 350 to 1,000.
C: The total number of feathered characters was not less than 1,000.

### Evaluation 2: Rubbing/scratch resistance

The prints produced in evaluation 1 were allowed to stand for one hr, and then rubbed with a water-base yellow fluorescent marker pen (ZEBRA PEN 2 (trademark)) manufactured by ZEBRA at a marking force of 4.9 x 10⁹ N/m², followed by visual inspection for staining of the yellow portion. The results were evaluated according to the following criteria.
A: Rubbing three times caused no stain.
B: For some of the papers, rubbing three times caused stain, although rubbing twice caused no stain.
C: For some of the papers, rubbing twice caused stain, although rubbing once caused no stain.
D: For some of the papers, rubbing once caused stain.

### Evaluation 3: Fast drying property

For prints produced in evaluation 1, immediately after printing, the same type of paper as used in the test was put on top of the print, and a load of 250 g/cm² was applied to the laminate. At that time, the time required for the printed ink no longer to be transferred onto the paper was determined as a fast drying property. The fast drying property was evaluated according to the following criteria:
A: Less than 20 sec
B: 20 to less than 60 sec
C: Not less than 60 sec

### Evaluation 4: Waterfastness

Water droplets were dropped on printed areas in the prints produced in evaluation 1. The prints were then visually inspected. The results were evaluated according to the following criteria.
A: No change occurred in printed areas on which water droplets had been dropped.
B: Marks (water marks) were formed around printed areas on which water droplets had been dropped.
C: The periphery of printed areas, on which water droplets had been dropped, was blurred.

### Evaluation 5 : Print density (OD value)

For the prints formed by the above printing, the reflection OD value of the blotted image portion was measured with Macbeth TR 972 manufactured by Macbeth. The average of the measurements was determined.

### Evaluation 6: Color bleeding

Printing on the above-described various printing papers was performed using ink sets 1 to 7 and reaction solutions as indicated in Table 6 by means of the ink jet recording apparatus.

In this case, the reaction solution was first printed at 100% duty, and color inks (cyan, magenta, and yellow inks) were then printed. The prints were visually inspected for uneven color mixing in boundaries of different colors. The results were evaluated according to the following criteria. For both the reaction solution and the inks, the amount thereof ejected was 0.7 µg/dot, and the density was 360 dpi. The results were as shown in Table 6.
A: No color mixing occurred, and the boundaries between adjacent colors were clear.
B: Feather-like color mixing occurred.
C: Significant color mixing occurred to such an extent that the boundaries between adjacent colors blurred.

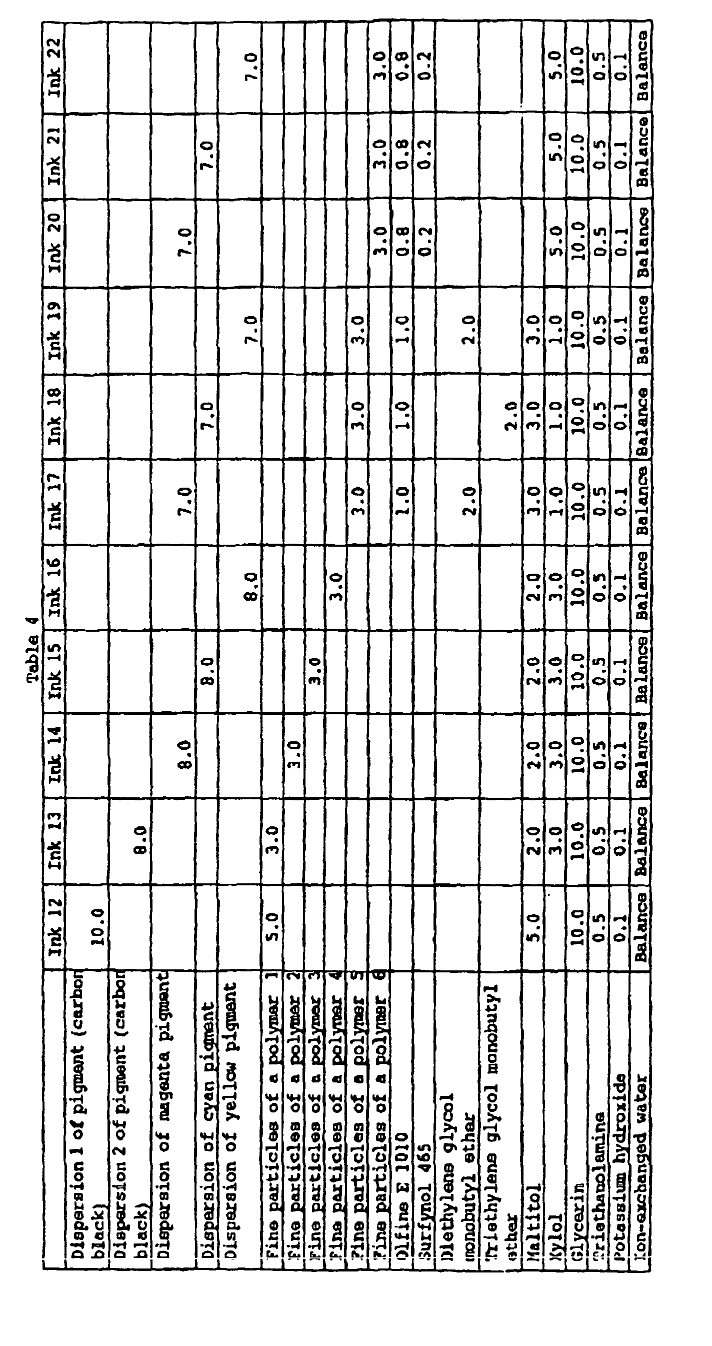

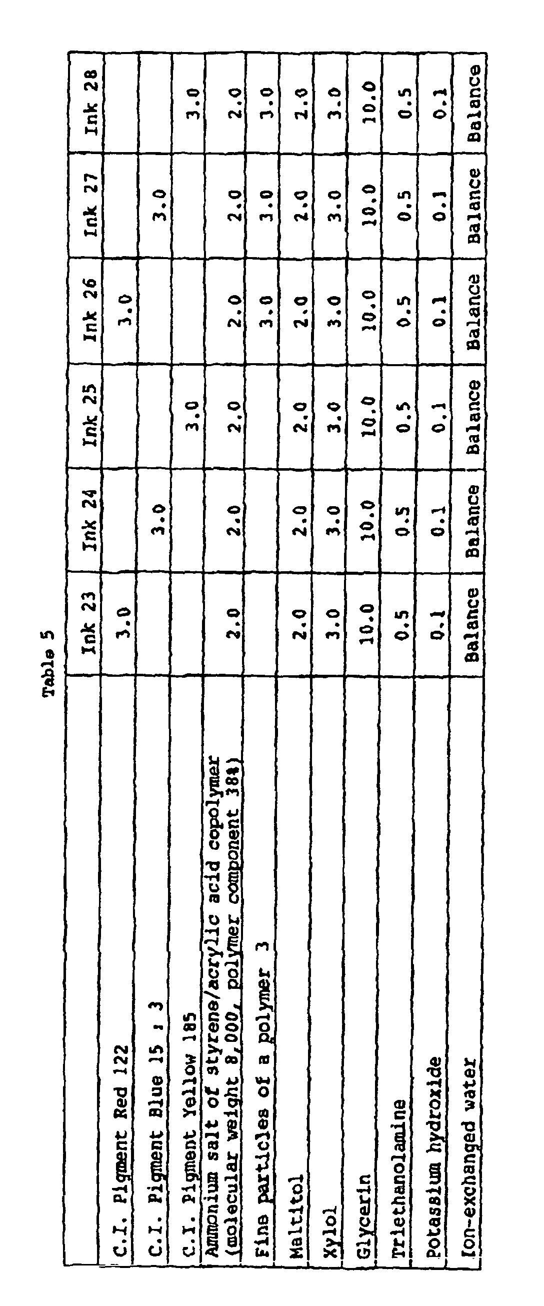

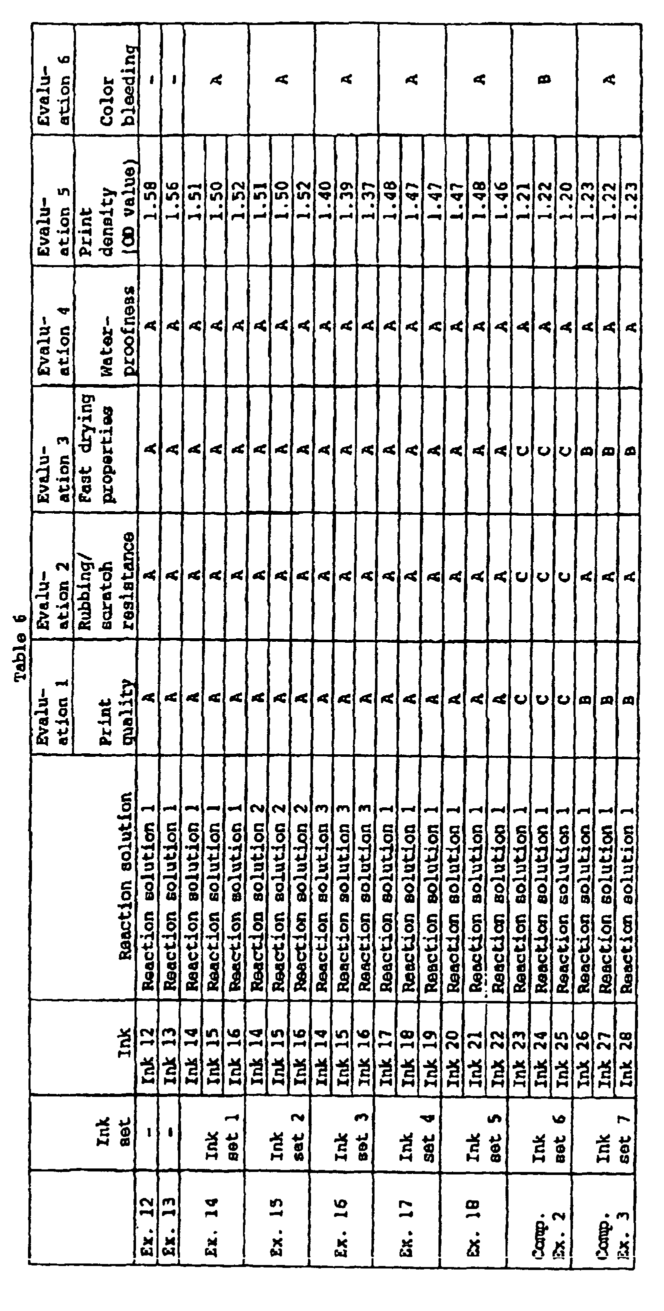

## Claims

1. An ink composition for ink jet recording, comprising a water-based pigment dispersion, fine particles of a polymer, a water-soluble organic solvent, and water,
wherein the water-based pigment dispersion comprises a pigment and a co-polymer which encapsulates the pigment, and the co-polymer is obtained from a polymerizable surfactant having both nonionic hydrophilicity and anionic hydrophilicity and a monomer.

2. The ink composition according to claim 1, wherein the polymerizable surfactant is a compound represented by formula (I): 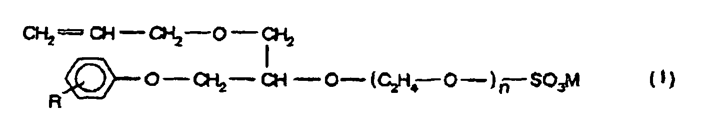 wherein
R represents a hydrogen atom or a hydrocarbon residue having 1 to 12 carbon atoms; n is a number of 2 to 20; and M represents an alkali metal atom, an ammonium salt, or an alkanolamine.

3. The ink composition according to claim 1 or 2, wherein the water-based pigment dispersion has been produced by dispersing the pigment in the polymerizable surfactant optionally in water and/or a water-soluble organic solvent and then polymerizing the dispersion together with the monomer.

4. The ink composition according to any one of claims 1 to 3, wherein the water-based pigment dispersion has been produced by further performing wet grinding after the polymerization.

5. The ink composition according to any one of claims 1 to 4, wherein the monomer is an electron-accepting monomer.

6. The ink composition according to claim 5, wherein the monomer is selected from the group consisting of diesters of fumaric acid, diesters of maleic acid, maleimides, and vinylidene cyanide.

7. The ink composition according to claim 5, wherein the monomer is selected from the group consisting of acrylic acid, acrylic esters, methacrylic acid, and methacrylic esters.

8. The ink composition according to any one of claims 1 to 7, which contains 1 to 20% by weight of the water-based pigment dispersion.

9. The ink composition according to any one of claims 1 to 8, wherein the fine particles of a polymer are comprised of a polymer having a film-forming property.

10. The ink composition according to any one of claims 1 to 9, wherein the fine particles of a polymer have a minimum film-forming temperature of 30°C or below.

11. The ink composition according to any one of claims 1 to 10, wherein the content of the fine particles of a polymer is 0.1 to 25% by weight based on the ink composition.

12. The ink composition according to any one of claims 1 to 11, wherein the fine particles of a polymer have a diameter of not more than 400 nm.

13. The ink composition according to any one of claims 1 to 12, wherein the fine particles of a polymer have a film-forming property, have carboxyl groups on the surface thereof, and have a reactivity with a divalent metal salt such that, when 3 volumes of a 0.1 wt% aqueous emulsion is brought into contact with one volume of a 1 mol/liter aqueous divalent metal salt solution, the time required for the transmission of light having a wavelength of 700 nm to become 50% of the initial value is not more than 1 x 10⁴ sec.

14. The ink composition according to any one of claims 1 to 13, wherein an aqueous emulsion prepared by dispersing the fine particles of a polymer in water and adjusting the concentration of the aqueous emulsion to 10% by weight has a contact angle on a teflon sheet of not less than 70 degrees.

15. The ink composition according to any one of claims 1 to 14, wherein the fine particles of a polymer contain 1 to 10% by weight of a structure derived from an unsaturated vinyl monomer having a carboxyl group and has a structure crosslinked by a crosslinkable monomer having two or more polymerizable double bonds with the content of the structure derived from the crosslinkable monomer being 0.2 to 4% by weight.

16. The ink composition according to any one of claims 1 to 15, wherein the fine particles of a polymer have a core/shell structure.

17. The ink composition according to claim 16, wherein the core comprises an epoxy-containing resin while the shell comprises a carboxyl-containing resin.

18. The ink composition according to any one of claims 1 to 17, wherein the fine particles of a polymer are self-crosslinkable.

19. The ink composition according to any one of claims 1 to 18, wherein the water-soluble organic solvent has a boiling point of 180°C or above.

20. The ink composition according to any one of claims 1 to 19, which further contains a glycol ether and/or an acetylene glycol surfactant.

21. An ink jet recording method comprising the steps of: ejecting droplets of an ink composition; and depositing the droplets onto a recording medium to perform printing, the ink composition being one according to any one of claims 1 to 20.

22. A record produced by the ink jet recording method according to claim 21.

23. An ink set for ink jet recording, comprising an ink composition according to any one of claims 1 to 20.

24. An ink jet recording method comprising the step of depositing, on a recording medium, an ink composition and a reaction solution containing a reactant which, when brought into contact with the ink composition, produces coagulate, thereby performing printing,
the ink composition being one according to any one of claims 1 to 20.

25. The ink jet recording method according to claim 24, wherein the reactant is a metal salt, a polyallylamine, or a derivative of the polyallylamine.

26. The ink jet recording method according to claim 25, wherein the metal salt is a nitrate or a carboxylate.

27. The ink jet recording method according to claim 26, wherein carboxylic acid ions constituting the carboxylate have been derived from a saturated aliphatic monocarboxylic acid having 1 to 6 carbon atoms (hydrogen atoms on the saturated aliphatic hydrocarbon group in the monocarboxylic acid being optionally substituted by a hydroxyl group) or a carbocyclic monocarboxylic acid having 6 to 10 carbon atoms.

28. The ink jet recording method according to any one of claims 24 to 27, wherein the reaction solution further contains triethylene glycol monobutyl ether and glycerin.

29. The ink jet recording method according to any one of claims 24 to 28, wherein the step of depositing the droplets of the ink composition on the recording medium is carried out after the step of depositing the reaction solution onto the recording medium.

30. The ink jet recording method according to any one of claims 24 to 28, wherein the step of depositing the droplets of the ink composition on the recording medium is carried out before the step of depositing the reaction solution onto the recording medium.

31. The ink jet recording method according to any one of claims 24 to 30, wherein the step of depositing the droplets of the ink composition on the recording medium or the step of depositing the reaction solution onto the recording medium is carried out by an ink jet recording method wherein droplets are ejected and deposited onto the recording medium to perform printing.

32. A record produced by the recording method according to any one of claims 24 to 31.

33. An ink jet recording apparatus for performing printing by depositing, on a recording medium, an ink composition and a reaction solution containing a reactant which, when brought into contact with the ink composition, produces coagulate,
the ink composition being one according to any one of claims 1 to 20,
said apparatus comprising:
means for depositing the reaction solution onto the recording medium;
means for depositing the ink composition onto the recording medium to record an image; and
ink jet recording means for controlling means for depositing the reaction solution onto the recording medium and means for depositing the ink composition onto the recording medium to record an image.

34. The apparatus according to claim 33, wherein means for controlling means for depositing the reaction solution onto the recording medium and means for depositing the ink composition onto the recording medium to record an image is ink jet recording means.

35. A record produced by printing by means of the recording apparatus according to claim 33 or 34.

## Patentansprüche

1. Eine Tintenzusammensetzung zur Tintenstrahlaufzeichnung, umfassend eine wasserbasierende Pigmentdispersion, feine Partikel eines Polymers, ein wasserlösliches organisches Lösungsmittel und Wasser, worin die wasserbasierende Pigmentdispersion ein Pigment und ein Copolymer umfasst, das das Pigment verkapselt, und das Copolymer wird aus einem polymerisierbaren Tensid mit sowohl nicht ionischer Hydrophilie wie auch anionischer Hydrophilie und einem Monomer erhalten.

2. Die Tintenzusammensetzung gemäß Anspruch 1. worin das polymerisierbare Tensid eine Verbindung ist, die durch die folgende Formel (I) dargestellt wird: 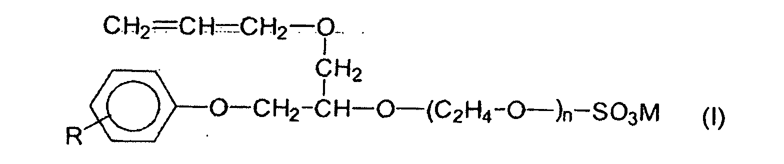 worin R ein Wasserstoffatom oder einen Kohlenwasserstoffrest mit 1 bis 12 Kohlenstoffatomen darstellt; n eine Zahl von 2 bis 20 ist; und M ein Alkalimetallatom, ein Ammoniumsalz oder ein Alkanolamin darstellt.

3. Die Tintenzusammensetzung gemäß Anspruch 1 oder 2, worin die wasserbasierende Pigmentdispersion durch Dispergieren des Pigments in dem polymerisierbaren Tensid, optional in Wasser und/oder einem wasserlöslichen organischen Lösungsmittel, und anschließendem Polymerisieren der Dispersion zusammen mit dem Monomer hergestellt wurde.

4. Die Tintenzusammensetzung gemäß einem der Ansprüche 1 bis 3, worin die wasserbasierende Pigmentdispersion durch das zusätzliche Durchführen des Nassmahlens nach der Polymerisation hergestellt wurde.

5. Die Tintenzusammensetzung gemäß einem der Ansprüche 1 bis 4, worin das Monomer ein Elektronen-aufnehmendes Monomer ist.

6. Die Tintenzusammensetzung gemäß Anspruch 5, worin das Monomer aus der Gruppe ausgewählt ist, die aus Diestern der Fumarsäure, Diestern der Maleinsäure, Maleimiden und Vinylidencyanid besteht.

7. Die Tintenzusammensetzung gemäß Anspruch 5, worin das Monomer aus der Gruppe ausgewählt ist, die aus Acrylsäure, Acrylsäureestern, Methacrylsäure und Methacrylsäureestern besteht.

8. Die Tintenzusammensetzung gemäß einem der Ansprüche 1 bis 7, die 1 bis 20 Gewichtsprozent der wasserbasierenden Pigmentdispersion enthält.

9. Die Tintenzusammensetzung gemäß einem der Ansprüche 1 bis 8, worin die feinen Partikel eines Polymers aus einem Polymer mit einer filmbildenden Eigenschaft bestehen.

10. Die Tintenzusammensetzung gemäß einem der Ansprüche 1 bis 9, worin die feinen Partikel eines Polymers eine minimale filmbildende Temperatur von 30 °C oder darunter aufweisen.

11. Die Tintenzusammensetzung gemäß einem der Ansprüche 1 bis 10, worin der Gehalt an den feinen Partikeln eines Polymers 0,1 bis 25 Gewichtsprozent basierend auf der Tintenzusammensetzung beträgt.

12. Die Tintenzusammensetzung gemäß einem der Ansprüche 1 bis 11, worin die feinen Partikel eines Polymers einen Durchmesser von nicht mehr als 400 nm aufweisen.

13. Die Tintenzusammensetzung gemäß einem der Ansprüche 1 bis 12, worin die feinen Partikel eines Polymers eine filmbildende Eigenschaft aufweisen, Carbonylgruppen auf der Oberfläche davon aufweisen und eine Reaktivität mit einem divalenten Metallsalz aufweisen, so dass, wenn drei Volumen einer 0,1 gewichtsprozentigen wässrigen Emulsion mit einem Volumen einer 1 Mol/Liter wässrigen divalenten Metallsalzlösung in Kontakt gebracht werden, die für die Transmission von Licht mit einer Wellenlänge von 700 nm notwendige Zeit, um 50 % des anfänglichen Wertes zu erreichen, nicht mehr als 1 x 10⁴ Sekunden beträgt.

14. Die Tintenzusammensetzung gemäß einem der Ansprüche 1 bis 13, worin eine wässrige Emulsion, die durch Dispergieren der feinen Partikel eines Polymers in Wasser und die Anpassung der Konzentration der wässrigen Emulsion auf 10 Gewichtsprozent hergestellt wurde, einen Kontaktwinkel auf einer Teflonplatte von nicht weniger als 70° aufweist.

15. Die Tintenzusammensetzung gemäß einem der Ansprüche 1 bis 14, worin die feinen Partikel eines Polymers 1 - 10 Gewichtsprozent einer Struktur enthalten, die aus einem nicht gesättigten Vinylmonomer mit einer Carbonylgruppe abgeleitet ist, und eine Struktur aufweist, die durch ein vernetzbares Monomer mit 2 oder mehr polymerisierbaren Doppelbindungen vernetzt ist, wobei der Gehalt der Struktur, die aus dem vernetzbaren Monomer abgeleitet ist, 0,2 bis 4 Gewichtsprozent beträgt.

16. Die Tintenzusammensetzung gemäß einem der Ansprüche 1 bis 5, worin die feinen Partikel eines Polymers eine Kern/Hüllstruktur aufweisen.

17. Die Tintenzusammensetzung gemäß Anspruch 16, worin der Kern ein Epoxidenthaltendes Harz umfasst, während die Hülle ein Carbonyl-enthaltendes Harz umfasst.

18. Die Tintenzusammensetzung gemäß einem der Ansprüche 1 bis 17, worin die feinen Partikel eines Polymers selbstvernetzend sind.

19. Die Tintenzusammensetzung gemäß einem der Ansprüche 1 bis 18, worin das wasserlösliche organische Lösungsmittel einen Siedepunkt von 180 °C oder darüber aufweist.

20. Die Tintenzusammensetzung gemäß einem der Ansprüche 1 bis 19, die zusätzlich einen Glykolether und/oder ein Acetylenglycoltensid enthält.

21. Ein Tintenstrahlaufzeichnungsverfahren, das die folgenden Schritte umfasst: das Ausstoßen von Tröpfchen einer Tintenzusammensetzung; und das Absetzen der Tröpfchen auf ein Aufzeichnungsmedium zur Durchführung des Druckens, wobei die Tintenzusammensetzung eine gemäß einem der Ansprüche 1 bis 20 ist.

22. Eine Aufzeichnung, die durch das Tintenstrahlaufzeichnungsverfahren gemäß Anspruch 21 hergestellt wurde.

23. Ein Tintensatz zur Tintenstrahlaufzeichnung, der eine Tintenzusammensetzung gemäß einem der Ansprüche 1 bis 20 umfasst.

24. Ein Tintenstrahlaufzeichnungsverfahren, das den Schritt des Absetzens einer Tintenzusammensetzung und einer Reaktionslösung, die einen Reaktanten enthält, der, wenn er mit der Tintenzusammensetzung in Kontakt gebracht wird, ein Koagulat produziert, auf ein Aufzeichnungsmedium, wodurch der Druck durchgeführt wird, umfasst, wobei die Tintenzusammensetzung eine gemäß einem der Ansprüche 1 bis 20 ist.

25. Das Tintenstrahlaufzeichnungsverfahren gemäß Anspruch 24, worin der Reaktant ein Metallsalz, ein Polyallylamin oder ein Derivat des Polyallylamins ist.

26. Das Tintenstrahlaufzeichnungsverfahren gemäß Anspruch 25, worin das Metallsalz ein Nitrat oder ein Carboxylat ist.

27. Das Tintenstrahlaufzeichnungsverfahren gemäß Anspruch 26, worin die Carbonsäureionen, die das Carboxylat ausmachen, aus einer gesättigten aliphatischen Monocarbonsäure mit 1 bis 6 Kohlenstoffatomen (wobei Wasserstoffatome auf der gesättigten aliphatischen Kohlenwasserstoffgruppe in der Monocarbonsäure optional durch eine Hydroxylgruppe substituiert sind) oder einer carbocyclischen Monocarbonsäure mit 6 bis 10 Kohlenstoffatomen abgeleitet wurden.

28. Das Tintenstrahlaufzeichnungsverfahren gemäß einem der Ansprüche 24 bis 27, worin die Reaktionslösung zusätzlich Triethylenglycolmonobutylether und Glycerin enthält.

29. Das Tintenstrahlaufzeichnungsverfahren gemäß einem der Ansprüche 24 bis 28, worin der Schritt des Absetzens der Tröpfchen der Tintenzusammensetzung auf das Aufzeichnungsmedium nach dem Schritt des Absetzens der Reaktionslösung auf das Aufzeichnungsmedium durchgeführt wird.

30. Das Tintenstrahlaufzeichnungsverfahren gemäß einem der Ansprüche 24 bis 28, worin der Schritt des Absetzens der Tröpfchen der Tintenzusammensetzung auf das Aufzeichnungsmedium vor dem Schritt des Absetzens der Reaktionslösung auf das Aufzeichnungsmedium durchgeführt wird.

31. Das Tintenstrahlaufzeichnungsverfahren gemäß einem der Ansprüche 24 bis 30, worin der Schritt des Absetzens der Tröpfchen der Tintenzusammensetzung auf das Aufzeichnungsmedium oder der Schritt des Absetzens der Reaktionslösung auf das Aufzeichnungsmedium durch ein Tintenstrahlaufzeichnungsverfahren durchgeführt wird, worin Tröpfchen auf das Aufzeichnungsmedium ausgestoßen und abgesetzt werden, um das Drucken durchzuführen.

32. Eine Aufzeichnung, die durch das Aufzeichnungsverfahren gemäß einem der Ansprüche 24 bis 31 hergestellt wurde.

33. Eine Tintenstrahlaufzeichnungsvorrichtung zur Durchführung eines Drucks durch Absetzen einer Tintenzusammensetzung und einer Reaktionslösung, die einen Reaktanten enthält, der, wenn er mit der Tintenzusammensetzung in Kontakt gebracht wird, ein Koagulat produziert, auf ein Aufzeichnungsmedium, wobei die Tintenzusammensetzung eine gemäß einem der Ansprüche 1 bis 20 ist, wobei besagte Vorrichtung das Folgende umfasst:
Mittel zum Absetzen der Reaktionslösung auf das Aufzeichnungsmedium; Mittel zum Absetzen der Tintenzusammensetzung auf das Aufzeichnungsmedium zur Aufnahme eines Bildes; und Tintenstrahlaufzeichnungsmittel zur Steuerung der Mittel zum Absetzen der Reaktionslösung auf das Aufzeichnungsmedium und der Mittel zum Absetzen der Tintenzusammensetzung auf das Aufzeichnungsmedium zur Aufnahme eines Bildes.

34. Die Vorrichtung gemäß Anspruch 33, worin die Mittel zur Steuerung der Mittel zum Absetzen der Reaktionslösung auf das Aufzeichnungsmedium und der Mittel zum Absetzen der Tintenzusammensetzung auf das Aufzeichnungsmedium zur Aufzeichnung eines Bildes Tintenstrahlaufzeichnungsmittel sind.

35. Eine Aufzeichnung, die durch Drucken mittels der Aufzeichnungsvorrichtung gemäß Anspruch 33 oder 34 hergestellt ist.

## Revendications

1. Composition d'encre pour enregistrement par jet d'encre, comprenant une dispersion de pigment à base d'eau, de fines particules d'un polymère, un solvant organique soluble dans l'eau, et de l'eau,
dans laquelle la dispersion de pigment à base d'eau comprend un pigment et un copolymère qui encapsule le pigment, et le copolymère est obtenu à partir d'un surfactant polymérisable ayant une hydrophilicité nonionique et une hydrophilicité anionique et un monomère.

2. Composition d'encre selon la revendication 1, dans laquelle le surfactant polymérisable est un composé représenté par la formule (1) : 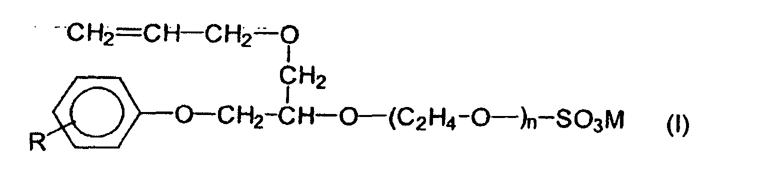 dans laquelle
R représente un atome d'hydrogène ou un résidu d'hydrocarbure ayant de 1 à 12 atomes de carbone ; n est un nombre de 2 à 20 ; et M représente un atome de métal alcalin, un sel d'ammonium ou un alcanolamine.

3. Composition d'encre selon la revendication 1 ou 2, dans laquelle la dispersion de pigment à base d'eau est produite par la dispersion du pigment dans le surfactant polymérisable optionnellement dans de l'eau et/ou dans un solvant organique soluble dans l'eau, puis par la polymérisation de la dispersion avec le monomère.

4. Composition d'encre selon l'une quelconque des revendications 1 à 3, dans laquelle la dispersion de pigment à base d'eau est produite en effectuant en outre un broyage humide après la polymérisation.

5. Composition d'encre selon l'une quelconque des revendications 1 à 4, dans laquelle le monomère est un monomère acceptant les électrons.

6. Composition d'encre selon la revendication 5, dans laquelle le monomère est sélectionné dans le groupe se composant de diesters d'acide fumarique, de diesters d'acide maléique, de maléimides et de cyanure de vinylidène.

7. Composition d'encre selon la revendication 5, dans laquelle le monomère est sélectionné dans le groupe se composant d'acide acrylique, d'esters acryliques, d'acide méthacrylique et d'esters méthacryliques.

8. Composition d'encre selon l'une quelconque des revendications 1 à 7, qui contient de 1 à 20 % en poids de la dispersion de pigment à base d'eau.

9. Composition d'encre selon l'une quelconque des revendications 1 à 8, dans laquelle les particules fines d'un polymère sont constituées d'un polymère ayant une propriété de formation de pellicule.

10. Composition d'encre selon l'une quelconque des revendications 1 à 9, dans laquelle les particules fines d'un polymère ont une température minimale de formation de pellicule de 30 °C ou moins.

11. Composition d'encre selon l'une quelconque des revendications 1 à 10, dans laquelle le contenu des particules fines d'un polymère est de 0,1 à 25 % en poids en fonction de la composition d'encre.

12. Composition d'encre selon l'une quelconque des revendications 1 à 11, dans laquelle les particules fines d'un polymère ont un diamètre ne dépassant pas 400 nm.

13. Composition d'encre selon l'une quelconque des revendications 1 à 12, dans laquelle les particules fines d'un polymère ont une propriété de formation de pellicule, ont des groupes carboxyles sur la surface de celles-ci, et ont une réactivité avec un sel de métal divalent de telle sorte que, lorsque trois volumes d'une émulsion aqueuse à 0,1 % en poids sont mis en contact avec un volume d'une solution aqueuse de sel de métal divalent à 1 mol/litre, le temps nécessaire à la transmission de la lumière ayant une longueur d'onde de 700 nm pour atteindre 50 % de la valeur initiale ne dépasse pas 1 x 10⁴ s.

14. Composition d'encre selon l'une quelconque des revendications 1 à 13, dans laquelle une émulsion aqueuse préparée par dispersion de particules fines d'un polymère dans de l'eau et par ajustement de la concentration de l'émulsion aqueuse à 10 % en poids a un angle de contact sur une feuille de téflon d'au moins 70°.

15. Composition d'encre selon l'une quelconque des revendications 1 à 14, dans laquelle les particules fines d'un polymère contiennent de 1 à 10 % en poids d'une structure dérivée d'un monomère de vinyle non saturé ayant un groupe carboxyle et ont une structure réticulée par un monomère réticulable ayant au moins deux doubles liaisons polymérisables, le contenu de la structure dérivée du monomère réticulable étant de 0,2 à 4 % en poids.

16. Composition d'encre selon l'une quelconque des revendications 1 à 15, dans laquelle les particules fines d'un polymère ont une structure de noyau/coque.

17. Composition d'encre selon la revendication 16, dans laquelle le noyau comprend une résine contenant un époxy alors que la coque comprend une résine contenant un carboxyle.

18. Composition d'encre selon l'une quelconque des revendications 1 à 17, dans laquelle les particules fines d'un polymère peuvent être auto-réticulables.

19. Composition d'encre selon l'une quelconque des revendications 1 à 18, dans laquelle le solvant organique soluble dans l'eau a un point d'ébullition de 180 °C ou plus.

20. Composition d'encre selon l'une quelconque des revendications 1 à 19, qui contient en outre un éther de glycol et/ou un surfactant de glycol d'acétylène.

21. Procédé d'enregistrement par jet d'encre comprenant les étapes consistant à : éjecter des gouttelettes d'une composition d'encre ; et déposer les gouttelettes sur un support d'enregistrement pour effectuer l'impression, la composition d'encre étant selon l'une quelconque des revendications 1 à 20.

22. Enregistrement produit par le procédé d'enregistrement par jet d'encre selon la revendication 21.

23. Ensemble d'encre pour enregistrement par jet d'encre, comprenant une composition d'encre selon l'une quelconque des revendications 1 à 20.

24. Procédé d'enregistrement par jet d'encre comprenant l'étape consistant à déposer, sur un support d'enregistrement, une composition d'encre et une solution de réaction contenant un réactif qui, lorsqu'il est mis en contact avec la composition d'encre, produit une coagulation, ce qui réalise l'impression, la composition d'encre étant selon l'une quelconque des revendications 1 à 20.

25. Procédé d'enregistrement par jet d'encre selon la revendication 24, dans lequel le réactif est un sel de métal, une polyallylamine, ou un dérivé de polyallylamine

26. Procédé d'enregistrement par jet d'encre selon la revendication 25, dans lequel le sel de métal est un nitrate ou un carboxylate.

27. Procédé d'enregistrement par jet d'encre selon la revendication 26, dans lequel les ions d'acide carboxylique constituant le carboxylate sont dérivés d'un acide monocarboxylique aliphatique saturé ayant de 1 à 6 atomes de carbone (les atomes d'hydrogène sur le groupe d'hydrocarbure aliphatique saturé dans l'acide monocarboxylique étant optionnellement remplacés par un groupe hydroxyle) ou un acide monocarboxylique carbocyclique ayant de 6 à 10 atomes de carbone.

28. Procédé d'enregistrement par jet d'encre selon l'une quelconque des revendications 24 à 27, dans lequel la solution de réaction contient en outre de l'éther monobutyle de glycol triéthylène et de la glycérine.

29. Procédé d'enregistrement par jet d'encre selon l'une quelconque des revendications 24 à 28, dans lequel l'étape consistant à déposer les gouttelettes de la composition d'encre sur le support d'enregistrement est effectuée après l'étape consistant à déposer la solution de réaction sur le support d'enregistrement.

30. Procédé d'enregistrement par jet d'encre selon l'une quelconque des revendications 24 à 28, dans laquelle l'étape consistant à déposer les gouttelettes de la composition d'encre sur le support d'enregistrement est effectuée avant l'étape consistant à déposer la solution de réaction sur le support d'enregistrement.

31. Procédé d'enregistrement par jet d'encre selon l'une quelconque des revendications 24 à 30, dans lequel l'étape consistant à déposer les gouttelettes de la composition d'encre sur le support d'enregistrement ou l'étape consistant à déposer la solution de réaction sur le support d'enregistrement est effectuée par un procédé d'enregistrement par jet d'encre dans lequel les gouttelettes sont éjectées et déposées sur le support d'enregistrement pour effectuer l'impression.

32. Enregistrement produit par le procédé d'enregistrement selon l'une quelconque des revendications 24 à 31.

33. Appareil d'enregistrement par jet d'encre pour effectuer l'impression par dépôt, sur un support d'enregistrement, d'une composition d'encre et d'une solution de réaction contenant un réactif qui, lorsqu'il est mis en contact avec la composition d'encre, produit une coagulation,
la composition d'encre étant selon l'une quelconque des revendications 1 à 20,
ledit appareil comprenant :
un moyen pour déposer la solution de réaction sur le support d'enregistrement ;
un moyen pour déposer la composition d'encre sur le support d'enregistrement pour enregistrer une image ; et
un moyen d'enregistrement par jet d'encre pour contrôler le moyen de dépôt de la solution de réaction sur le support d'enregistrement et le moyen de dépôt de la composition d'encre sur le support d'enregistrement pour enregistrer une image.

34. Appareil selon la revendication 33, dans lequel le moyen pour contrôler le moyen de dépôt de la solution de réaction sur le support d'enregistrement et le moyen de dépôt de la composition d'encre sur le support d'enregistrement pour enregistrer une image est un moyen d'enregistrement par jet d'encre.

35. Enregistrement produit par l'impression au moyen de l'appareil d'enregistrement selon la revendication 33 ou 34.
